(19) Europäisches Patentamt
European Patent Office
Office européen des brevets

(11) **EP 3 428 130 B1**

(12) **EUROPÄISCHE PATENTSCHRIFT**

(45) Veröffentlichungstag und Bekanntmachung des Hinweises auf die Patenterteilung:
**28.10.2020 Patentblatt 2020/44**

(51) Int Cl.:
***C02F 11/08*** *(2006.01)*      ***B01J 3/00*** *(2006.01)*
***C10J 3/78*** *(2006.01)*      ***D21C 3/00*** *(2006.01)*

(21) Anmeldenummer: **18401020.5**

(22) Anmeldetag: **28.02.2018**

(54) **VERFAHREN ZUR VERGASUNG UND VERSTROMUNG VON FEUCHTER BIOMASSE MIT ÜBERKRITISCHEM WASSER**

METHOD FOR GASIFICATION AND THE GENERATION OF ELECTRICAL POWER FROM WET BIOMASS WITH SUPERCRITICAL WATER

PROCÉDÉ DE GAZÉIFICATION ET DE PRODUCTION DE L'ÉNERGIE ÉLECTRIQUE À PARTIR DE BIOMASSE HUMIDE EN PRÉSENCE DEAU SURCRITIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2017 DE 102017115359**

(43) Veröffentlichungstag der Anmeldung:
**16.01.2019 Patentblatt 2019/03**

(73) Patentinhaber: **VPC GmbH**
**03226 Vetschau (DE)**

(72) Erfinder:
• **GOMES, José**
**29614 Soltau (DE)**
• **CLAUSNITZER, Moritz**
**09600 Oberschöna (DE)**

(74) Vertreter: **Haschick, Gerald**
**Patentanwaltskanzlei**
**Ostrower Wohnpark 2**
**03046 Cottbus (DE)**

(56) Entgegenhaltungen:
EP-A1- 1 772 202      WO-A1-2018/115593
DE-A1-102012 013 000

**Beschreibung**

Die Vergasung von Biomasse mit überkritischem Wasser ist eine effiziente Technologie zur Erzeugung eines sauberen und hochkalorischen Produktgases aus Biomasse. Da Wasser als Reaktions- und Lösungsmittel und Reaktant im Verfahren allgegenwärtig ist, können dabei auch Biomassen mit einem sehr hohen Wassergehalt bei kurzen Verweilzeiten effizient vergast werden.

Eine hydrothermale Vergasung von Biomasse zum Zwecke der Stromerzeugung hat das Potenzial, erneuerbaren Strom kostengünstig und flexibel zur Verfügung zu stellen und dabei die Forderungen des EEG 2017 zu bedienen. Ferner bietet sie den Ausblick, dauerhaft auch ohne Förderung auszukommen, wenn sich die Stromlieferung auf die Stunden mit geringer Produktion aus Sonne und Wind konzentriert.

Die Vergasung von Biomasse mit überkritischem Wasser ist ein innovatives thermochemisches Verfahren, mit dem Biomasse bei hohen Temperaturen und Drücken in Wasser umgesetzt wird. Es eignet sich vor allem für die Verwertung wässriger Biomassen, die mit dem Verfahren bei kurzen Verweilzeiten und hohen Abbauraten effizient vergast werden können. In der Folge ergibt sich ein Produktgas, dessen Verstromung durch Wärme-Kraft-Maschinen möglich ist.

1.1 Hydrothermale Verfahren zur Verwertung von Biomasse

1.1.1 Einleitung

Mit hydrothermalen Verfahren wird Biomasse unter erhöhten Temperaturen und Drücken in Wasser umgesetzt. Die verschiedenen Verfahren unterscheiden sich dabei nach Druck- und Temperaturniveau und zielen auf die Herstellung von hochkalorischen Produkten ab, welche effizient verwertet werden können. Zu diesem Zweck wird Biomasse hydrothermal karbonisiert, verflüssigt oder vergast.

Eine besondere Bedeutung kommt dabei dem Reaktions- und Lösungsmedium Wasser zu, welches auch als Reaktant und Katalysator an hydrothermalen Reaktionen beteiligt ist. Wesentliche Eigenschaften des Wassers ändern sich mit zunehmenden Temperaturen und Drücken und ermöglichen so erst die Anwendung verschiedener hydrothermaler Verfahren.

1.1.2 Überkritisches Wasser

Bei Umgebungsdruck (ca. 0,1013 MPa) siedet Wasser bei einer Temperatur von 100 °C. Um Wasser auch bei höheren Temperaturen in der flüssigen Phase zu halten, muss man entsprechend der Dampfdruckkurve den Druck erhöhen. Erreicht man den kritischen Punkt (T=374 °C; p=22,1 MPa), ist es nicht mehr möglich, Wasser durch weitere Druckerhöhung in den flüssigen Aggregatzustand zu bringen [6].

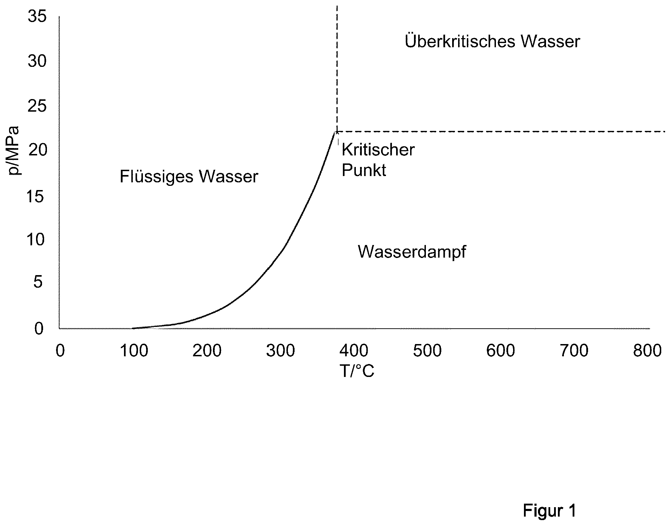

Wasser liegt dann nicht mehr in Abhängigkeit von Druck und Temperatur in flüssiger oder gasförmiger Form vor, sondern bildet ein homogenes, einphasiges Fluid und wird als überkritisches Wasser bezeichnet - siehe Figur 1: Dampfdruckkurve von Wasser.

Die thermophysikalischen Eigenschaften von Wasser sind druck- und temperaturabhängig und ändern sich dementsprechend mit steigenden Temperaturen und Drücken [7].

Von großer Bedeutung ist das sich ändernde Verhalten des Wassers als Lösungsmittel. Die relative dielektrische Permittivität $\varepsilon$, welche das Lösungsmittelverhalten bestimmt, sinkt mit steigender Temperatur, bis sie im überkritischen Bereich zwischen 10 und 25 liegt. Dieser Bereich ist bei Normbedingungen typisch für dipolare Flüssigkeiten wie Aceton oder Acetonitril [7]. Während die Selektivität für ionische und polare Stoffe verloren geht, beginnt sich Wasser also wie ein unpolares Lösungsmittel zu verhalten. Daraus resultieren im überkritischen Zustand eine vollständige Mischbarkeit mit anorganischen Gasen, sowie eine gute Mischbarkeit mit organischen Substanzen.

Im Gegensatz dazu nimmt die Löslichkeit für Salze ab ca. 400 °C stark ab [8]. Salze, die in überkritischem Wasser nicht löslich sind, fallen aus (Salze vom Typ 2) [7].

Weitere interessante Eigenschaften überkritischen Wassers sind die flüssigkeitsähnliche Dichte und gasähnliche Viskosität, welche Massetransport und diffusionskontrollierte chemische Reaktionen stark beschleunigen [7].

Auch nimmt das Ionenprodukt des Wassers bis ca. 250 °C zu [6]. Das hohe Ionenprodukt unterhalb des kritischen Punktes fördert sauer und basisch katalysierte Reaktionen. Neben Spaltungsreaktionen in der Biomasse werden so aber auch Korrosionsvorgänge beschleunigt [7].

Wasserstoffbrückenbindungen bleiben in überkritischem Wasser in beträchtlichem Ausmaß erhalten, wobei jedoch die ausgedehnte Netzwerkstruktur von flüssigem Wasser verloren geht [7]. Die verminderte Anzahl von Wasserstoffbrückenbindungen ist ein Grund für das stark reaktive Verhalten der einzelnen Wassermoleküle [8].

Erst die besonderen Eigenschaften von Wasser bei erhöhten Temperaturen und Drücken machen hydrothermale Verfahren zur Biomassebehandlung möglich. In hydrothermalen Verfahren ist Wasser Reaktionsmedium, Lösungsmittel und Reaktant zugleich. Wasser nimmt dadurch in den jeweiligen Prozessen eine zentrale Rolle ein. Darüber hinaus kann Wasser bei den verfahrensspezifischen Parametern Umlagerungs- und Eliminierungsreaktionen katalytisch begünstigen [6].

1.1.3 Übersicht über hydrothermale Verfahren zur Behandlung von Biomasse

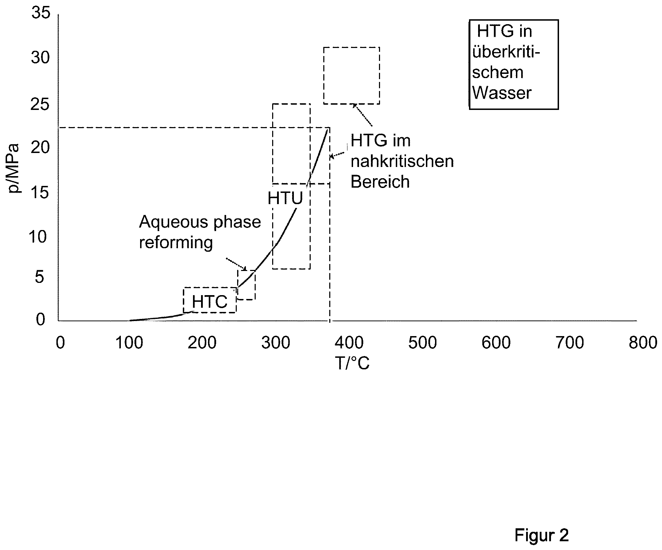

Da die thermophysikalischen Eigenschaften des Wassers von Druck und Temperatur abhängen, ist es möglich, durch die Wahl bestimmter Prozessparameter aus Biomasse durch hydrothermale Verfahren selektiv verschiedene Produkte zu erzeugen. Man unterscheidet dabei die Hydrothermale Karbonisierung (HTC), die Hydrothermale Verflüssigung (HTU) und die Hydrothermale Vergasung (HTG). In Figur 2 sind die verschiedenen Verfahren über der Dampfdruckkurve von Wasser aufgetragen - siehe Figur 2: Darstellung hydrothermaler Verfahren über der Dampfdruckkurve von Wasser.

Die Hydrothermale Karbonisierung findet bei Temperaturen zwischen 180 °C und 250 °C und Drücken zwischen 10 und 40 bar statt [9]. Bei Verweilzeiten von einigen Stunden wandelt sich die wässrige Biomasse durch Dehydratisierung und Decarboxylierung unter Wärmeabgabe in einen Kohleschlamm um, der nach Entwässerung und Trocknung als kohleartiger Feststoff vorliegt.

Dieser Feststoff ähnelt in seiner elementaren Zusammensetzung Braunkohle und kann nach seiner Entwässerung und Trocknung entsprechende Brennwerte bis über 30 MJ/kg vorweisen [9]. Neben der HTC-Kohle entstehen während des Prozesses $CO_2$, $H_2O$ und in Wasser gelöste organische Produkte. Die entstehende HTC-Kohle hat eine hohe Energiedichte, ist gut lager- und transportierbar und kann energetisch oder stofflich verwertet werden. Denkbar wäre neben der Mitverbrennung in Kohlekraftwerken beispielsweise die Einbringung in Böden [9, 10]. Ungünstige Eigenschaften von unbehandelter Biomasse, die einer Verwendung als Brennstoff entgegenstehen, werden durch die Umwandlung in HTC-Kohle überwunden: Der spezifische Heizwert wird erhöht, die Entwässerung vereinfacht, sowie der Kaliumanteil reduziert [11].

Der Temperatur- und Druckbereich der Hydrothermalen Verflüssigung befindet sich zwischen 280 - 370 °C und 10 - 25 MPa [12]. Das Zielprodukt ist ein hochviskoser Teer mit einem hohen Heizwert. Im Vergleich zu dem trockenen Verfahren der schnellen Pyrolyse werden unter optimalen Bedingungen keine Feststoffe gebildet. Weiterhin ergeben sich ein höherer Heizwert, eine höhere Viskosität sowie ein niedrigerer Wassergehalt des Produktes [11, 13]. Der sich ergebende Teer ist besonders für die Erzeugung spezieller Kraftstoffe, als Brennstoff und als Rohmaterial für die chemische Industrie interessant [12].

Die Hydrothermale Vergasung kann sowohl im unterkritischen, nahkritischen und überkritischen Bereich durchgeführt werden. Die einzelnen Prozessvarianten unterscheiden sich dabei bezüglich des Katalysatoreinsatzes, der Zusammensetzung des Produktgases und des umsetzbaren Eduktes.

Bei etwas höheren Temperaturen als der hydrothermalen Karbonisierung ist es möglich, mithilfe von Edelmetallkatalysatoren Biomasse zu Wasserstoff umzusetzen ("Aqueous phase reforming") [13]. Allerdings ist bei den vergleichsweise geringen Temperaturen die Erzeugung von Wasserstoff thermodynamisch limitiert, sodass nur sehr geringe Trockenmassekonzentrationen umgesetzt werden können [11].

Im nahkritischen Bereich ist die Bildung von Methan thermodynamisch bevorzugt. Auch bei diesem Temperaturniveau sind Edelmetall-Katalysatoren nötig, um Biomasse zu vergasen [11]. Methan kann dabei sowohl unterhalb, als auch oberhalb des kritischen Punktes erzeugt werden. Während die Vergasung im unterkritischem Bereich Probleme durch Salzabscheidungen im überkritischen Wasser und damit einhergehende Verstopfungsgefahr der Anlage umgeht, nutzt das überkritische Verfahren die bessere Löslichkeit des überkritischen Wassers für organische Substanzen [11].

Im überkritischen Bereich bei 600 bis 700 °C findet die Vergasung von Biomasse mit überkritischem Wasser Anwendung. In diesem Temperaturbereich ist die Erzeugung von Wasserstoff aus Biomasse möglich.

Dies wird deutlich, wenn man die Reaktionsgleichungen der Wasserstoff- und Methanbildung aus Glucose betrachtet:

$$C_6H_{12}O_6 + 6H_2O \rightarrow 6CO_2 + 12H_2 \qquad \Delta H^0_{R\,298} = 37{,}9 \; kJ/mol$$

$$C_6H_{12}O_6 \rightarrow 3CH_4 + 3CO_2 \qquad \Delta H^0_{R\,298} = -394 \; kJ/mol$$

Da die Methanbildung exotherm ist, wird sie bei niedrigeren Temperaturen bevorzugt. Ein großer Wasserüberschuss und höhere Temperaturen begünstigen dagegen die Wasserstoffbildung [11]. Diese Arbeit konzentriert sich auf die Vergasung von Biomasse mit überkritischem Wasser. Bei diesem Prozess kann ein hochkalorisches Brenngas aus Methan und Wasserstoff erzeugt werden, wobei Kohlenstoffdioxid, höherwertige Kohlenwasserstoffe und geringe Mengen an Kohlenstoffmonoxid als Nebenprodukte entstehen [14]. Im Abwasser verbleiben anorganische sowie nicht umgesetzte organische Verbindungen [11].

Ein großer Vorteil dieser Verfahrensvariante besteht darin, dass Katalysatoren bei den vorliegenden Prozessbedingungen für die Vergasung nicht erforderlich sind. Sowohl bei der unterkritischen als auch bei der nahkritischen Variante der hydrothermalen Vergasung ist dies nicht der Fall. Hier bereiten Katalysatorvergiftungen große Probleme [11]. Gleichwohl werden auch bei der Vergasung mit überkritischem Wasser Katalysatoren getestet, um vollständige Umsetzungen bei hohen BiomasseKonzentrationen zu erreichen [11].

Ein weiterer Vorteil ist die sehr schnelle Umsetzung der Biomasse im Vergasungs-Reaktor mit Verweilzeiten von nur wenigen Minuten. Dies lässt eine kontinuierliche Vergasungsanlage mit überkritischem Wasser wirtschaftlich äußerst attraktiv erscheinen.

Mit den Vorteilen, die ein Prozess mit überkritischem Wasser mit sich bringt, gehen allerdings auch einige Herausforderungen einher. So erfordern die anspruchsvollen Prozessbedingungen hochwarmfeste und druckbeständige Materialien. Weiterhin fördert die hohe Vergasungstemperatur Korrosionsvorgänge. Auch ausfallende Salze können zu Problemen bei der Vergasung führen.

## 2 Grundlagen der hydrothermalen Vergasung

### 2.1 Einleitung

Erste Versuche zur Vergasung von Biomasse in überkritischem Wasser wurden in den 1970er Jahren am MIT in den USA durchgeführt [16]. Seitdem wurden eine Vielzahl von Modellsubstanzen sowie reale Biomasse von verschiedenen Forschergruppen in Batchreaktoren und kontinuierlichen Prozessen mit unterschiedlichen Prozessparametern vergast.

Eine kommerzielle Umsetzung der Technologie hat trotz der Vielzahl an publizierten wissenschaftlichen Arbeiten noch nicht stattgefunden [6].

Eine Reihe von wissenschaftlichen Arbeiten beschäftigt sich auch mit der technischen und wirtschaftlichen Bewertung der hydrothermalen Vergasung. Dabei liegt allerdings der Schwerpunkt oftmals nicht auf der Vergasung in überkritischem Wasser bei hohen Temperaturen wie in dieser Arbeit.

### 2.2 Chemische Reaktionen

Biomasse ist ein komplexes Gemisch, das sich in der Regel aus Wasser, Cellulose, Hemicellulose, Lignin, anorganischen Verbindungen, Lipiden, Proteinen, Stärke und Einfachzuckern zusammensetzt. Die Hauptbestandteile sind Cellulose, Hemicellulose und Lignin [17].

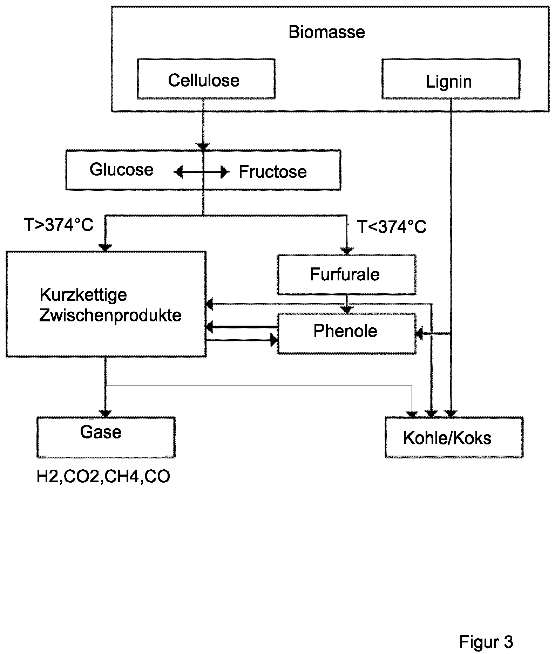

Figur 3 stellt das vereinfachte Reaktionsschema der hydrothermalen Biomasse-Konversion dar. Hemicellulose verhält sich dabei ähnlich wie Cellulose und ist deshalb nicht separat dargestellt - siehe Figur 3: schematische Darstellung des Abbaus von Cellulose und Lignin in überkritischem Wasser [6] und [8].

Durch Hydrolyse erfolgt ein Abbau der Cellulose und Hemicellulose zu Glucose und Fructose. Bei unterkritischen Temperaturen können nun Furfurale entstehen, die leicht polymerisieren und zu Kohle und Koksbildung führen können. Dieser Prozess ist die Grundlage der hydrothermalen Karbonisierung, bei der hydrothermalen Vergasung aber unerwünscht. Zielprodukte sind Gase, die bei überkritischen Temperaturen aus kurzkettigen Zwischenprodukten entstehen. Auch Phenole, die hauptsächlich aus Lignin gebildet werden, können bei hohen Temperaturen zu Gasen umgewandelt werden [8].

Die Komplexität realer Biomassen macht eine genaue Darstellung von Reaktionspfaden unmöglich, da sich die Reaktionspfade einzelner Bestandteile realer Biomassen gegenseitig beeinflussen [8, 6]. Offensichtlich ist, dass die Zusammensetzung der eingesetzten Biomasse in starkem Maße das Produkt der hydrothermalen Vergasung determiniert [8]. Weiterhin spielen Temperatur und Temperaturführung eine entscheidende Rolle [6]. So kann beispielsweise durch eine schnelle Aufheizrate Kohle- und Koksbildung unterdrückt werden [6].

Die Formeln 3-1 bis 3-5 stellen vereinfachte Gleichungen dar, welche die Vergasung von Biomasse mit überkritischem Wasser charakterisieren. Bei Temperaturen ab 600 °C wirkt überkritisches Wasser stark oxidativ und reagiert mit Biomasse zu $CO_2$ und $H_2$ (3-1) oder zu $CO$ und $H_2$ (3-2). Dabei ist x das molare Verhältnis von H/C und y das molare Verhältnis von O/C der Biomasse. Beide Reaktionen sind endotherm und werden dementsprechend durch hohe Temperaturen begünstigt. Wasserstoff wird dabei sowohl aus Biomasse, als auch aus Wasser abgegeben [6, 17].

$$CH_xO_y + (2-y)H_2 \rightarrow CO_2 + (2-y+\frac{x}{2})H_2 \qquad \text{3-1}$$

(fortgesetzt)

$$CH_xO_y + (1-y)H_2 \rightarrow CO + (1-y+\frac{\bar{x}}{2})H_2 \qquad \text{3-2}$$

$$CO + H_2O \leftrightarrow CC2 + H_2 \qquad \Delta H^0_{R\,298} = -41\ kJ/mol \qquad \text{3-3}$$

$$CO + 3H_2 \leftrightarrow CH_4 + H_2O \qquad \Delta H^0_{R\,298} = -211\ kJ/mol \qquad \text{3-4}$$

$$CO_2 + 4H_2 \leftrightarrow CH_4 + 2H_2O \qquad \Delta H^0_{R\,298} = -223\ kJ/mol \qquad \text{3-5}$$

Die Wassergas-Shift-Reaktion (3-3) führt dazu, dass bei steigenden Temperaturen der CO-Anteil im Produktgas sinkt. Dabei wird das durch Reaktion 2 entstandene CO mit Wasser zu $CO_2$ und $H_2$ umgesetzt. Durch Methanisierungs-Reaktionen (3-4 und 3-5) wird Methan gebildet, wobei ein Teil des entstandenen Wasserstoffs wieder verbraucht wird. Wassergas-Shift-Reaktion und Methanisierungs-Reaktionen sind exotherm.

Die gesamte Reaktionsenthalpie der Vergasung hängt also von dem Verhältnis der Einzelreaktionen zueinander ab. Ein hoher Methan- und geringer CO-Anteil des Produktgases suggeriert eine geringere, ein hoher Wasserstoffanteil des Produktgases eine höhere Reaktionsenthalpie. Durch geeignete Wahl von Prozessparametern wie Temperaturführung und Verweilzeit ist es möglich, die Produktgaszusammensetzung und damit auch die Reaktionsenthalpie der Vergasung zu beeinflussen.

2.3 Umsetzung des Edukts

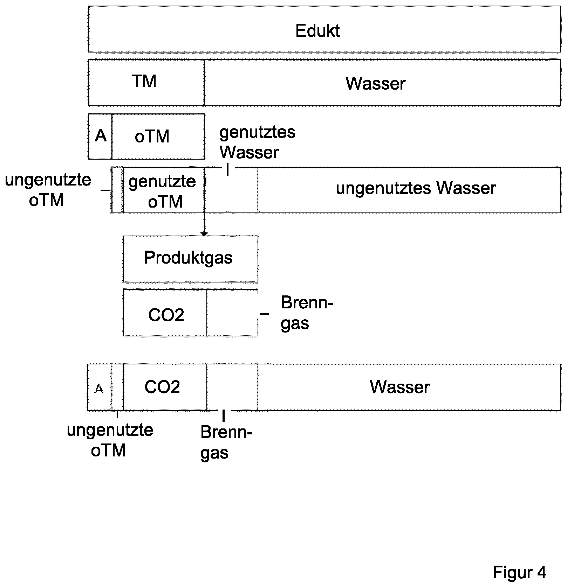

In Figur 4 ist die Umsetzung des Edukts während der Vergasung mit überkritischem Wasser schematisch dargestellt - siehe Figur 4: schematische Darstellung der Umsetzung des Edukts.

Das Edukt setzt sich aus Wasser und Trockenmasse (TM) zusammen, wobei der Wasseranteil in der Regel über 80 % beträgt [18]. Ein Teil der Trockenmasse ist dabei anorganisch und fällt während des Prozesses aus (A). Vergast wird der organische Teil der Trockenmasse (oTM). Ist die Vergasung unvollständig, wird dabei ein Teil der organischen Trockenmasse nicht genutzt. Im Vergasungsreaktor reagiert die genutzte organische Trockenmasse des Edukts mit Wasser und bildet ein methan- und wasserstoffhaltiges Produktgas. Dieses besteht zu einem großen Teil aus Kohlenstoffdioxid, das von den Brenngasen separiert werden sollte, um ein hochkalorisches Gas bereitzustellen.

Aus der Vergasung des Eduktes, das sich aus Wasser und organischer Trockenmasse zusammensetzt, ergeben sich somit in Summe anorganische Inhaltsstoffe, $CO_2$, Wasser, nicht vergaste organische Trockenmasse und Brenngas, welches energetisch verwertet werden kann.

2.4 Einfluss von Prozessparametern

Reaktionsführung und katalytische Effekte haben einen starken Einfluss auf die hydrothermale Vergasung, da diese stark kinetisch determiniert ist [8].

Eine Veränderung des Druckes im Bereich von 250 bis 400 bar beeinflusst die Gasausbeute nicht. Allerdings steigt der Methananteil im Produktgas mit steigendem Druck leicht an [6].

Im Gegensatz zum Druck hat die Temperatur einen starken Einfluss auf den Prozess. Eine höhere Temperatur zieht eine größere Gasausbeute sowie einen steigenden Wasserstoff-, Methan- und Ethananteil im Produktgas nach sich. Der CO-Anteil im Produktgas nimmt ab einer Temperatur von 550 °C kontinuierlich ab [6] .

Eine schnelle Aufheizung des Eduktes fördert die hydrothermale Vergasung, da eine langsame Aufheizung eine Teer- und Koksbildung bei unterkritischen Bedingungen nach sich zieht. Weiterhin werden durch ein schnelles Aufheizen Reaktionen von Zwischenprodukten untereinander vermieden [6]. Der Temperaturbereich der maximalen Teer- und Koksbildung sollte deshalb zügig durchschritten werden, um hohe Kohlenstoffumsätze zu erzielen [17]. Der genannte Temperaturbereich befindet sich zwischen 330 und 370 °C [16].

Mit zunehmender Verweilzeit im Reaktor steigt die Gasausbeute bis zu einem Höchstwert, ab dem es zu keiner weiteren Verbesserung kommt. Während der Methan- und Ethananteil des Produktgases infolge der Methanisierungs-Reaktionen mit zunehmender Verweilzeit steigt, sinkt der Wasserstoff- und CO-Anteil [6].

Einen großen Einfluss auf den Vergasungsprozess hat auch der Feed-Eintrag. Mit feineren Biomassepartikeln wird ein höherer Umsatz erzielt, da die Außenoberfläche größer und Transportwege innerhalb der Partikel kleiner sind. [6].

Eine größere Biomassekonzentration im Edukt steigert zwar den effektiven Gasertrag; die relative Gasausbeute sinkt jedoch, während der Methananteil im Produktgas steigt [17].

Um einen ökonomisch sinnvollen Prozess zu gestalten, ist es notwendig, auch höhere Biomassekonzentrationen mit einem hohen Umsatz vergasen zu können. Neben einer hohen Prozesstemperatur und einer schnellen Aufheizung kann dazu auch der Einsatz von Katalysatoren beitragen [17].

Geeignet für die hydrothermale Vergasung im überkritischen Temperaturbereich sind Kokskatalysatoren, mit denen auch Biomassen mit Trockenmassegehalten von 10 - 20 % vollständig vergast werden können [8]. Weiterhin wirken Alkalisalze katalytisch auf die Watergas-Shift-Reaktion. Diese sind in realer Biomasse bereits in ausreichendem Maße enthalten [6].

Ein weiterer Prozessparameter, der berücksichtigt werden sollte, ist der Oxidationskoeffizient n, der als das Verhältnis von der Menge des zugeführten Oxidationsmittels zu der theoretisch benötigten Menge des Oxidationsmittels definiert ist [20].

Die vollständig allotherme Prozessführung ermöglicht einen einfacheren Aufbau der Anlage. Da kein Oxidationsmittel zugeführt wird, muss die notwendige Prozesswärme vollständig über eine externe Heizung zugeführt werden.

Eine partielle Oxidation (0<n<1) kann einen autothermen Prozess ermöglichen und so die Energieeffizienz des Prozesses verbessern. Dabei wird die Prozesswärme intern durch Oxidationsreaktionen bereitgestellt, wodurch aber die Menge der entstehenden Brenngase sinkt. Besonders für schwierig zu vergasende aromatische Verbindungen wie Lignin und Kohle kann die Zufuhr eines Oxidationsmittels sinnvoll sein, um bei einer ähnlichen Menge von entstehenden Brenngasen zusätzliche Energie für den Prozess bereitzustellen [21].

Ein autothermer Prozess kann allerdings nur unter bestimmten Bedingungen erreicht werden und ist nicht für jedes Edukt energetisch vorteilhaft [21]. Diese Arbeit konzentriert sich aus diesen Gründen auf eine allotherme Prozessführung ohne Zufuhr eines Oxidationsmittels.

2.5 Herausforderungen der Technologie

Die hohen Temperaturen (bis 700 °C) der hydrothermalen Vergasung erfordern hochwarmfeste Materialien, die dem hohen Prozessdruck (> 22 MPa) standhalten können.

Sowohl in kritischem, als auch in nahkritischem Wasser kann es dabei zu starken Korrosionserscheinungen kommen [26]. Gründe hierfür sind das hohe Ionenprodukt des Wassers im nahkritischen Bereich, sowie die reduzierenden Bedingungen der hydrothermalen Vergasung. Entstehende reduzierende Gase wie $H_2$ und $CH_4$ können beispielsweise Oxidschichten destabilisieren, die Grundlage der Korrosionsbeständigkeit vieler Metalle und Legierungen sind. Auch in der Biomasse enthaltene Salze und Schwefel können korrosiv wirken [26]. Weitere Probleme können Salze bereiten, die aufgrund der schlechteren Löslichkeit polarer Substanzen in überkritischem Wasser ausfallen. Dies kann zu Verstopfungen führen, wenn Rohrdurchmesser und Fließgeschwindigkeit klein sind [22]. Weiterhin besteht die Gefahr, dass Salzablagerungen den Wärmeaustausch betroffener Flächen verringern und Korrosionsvorgänge beschleunigen [27]. Eine Salzabscheidung im Vergasungsprozess ist demzufolge unerlässlich.

Von zentraler Bedeutung für den Prozess ist der erforderliche Wärmeübertrager. Aufgrund des hohen Wassergehalts des Eduktes müssen große Mengen an Wasser auf eine Vergasungstemperatur von bis zu 700 °C erhitzt werden. Ein hoher thermischer Wirkungsgrad der Vergasungsanlage kann deswegen nur erreicht werden, wenn ein effizienter Wärmeaustausch zwischen Produktgas und Edukt ermöglicht wird, um durch Wärmerückgewinnung einen großen Teil der erforderlichen Heizwärme prozessintern zur Verfügung zu stellen.

Gleichzeitig muss aber eine möglichst schnelle Aufheizung des Eduktes erreicht werden, um unerwünschte Teer- und Koksbildung zu unterdrücken [18] .

Durch eine Erhöhung des Trockenmasseanteils des Eduktes kann der Wasseranteil des Eduktes und damit die erforderliche Heizenergie reduziert werden. Einerseits muss die Pumpfähigkeit des Eduktes gewährleistet werden, andererseits führt ein erhöhter Trockenmasseanteil zu einer geringeren Gasausbeute und damit zu einem höheren Anteil organischer Stoffe im Abwasser [6]. Der Einsatz von Katalysatoren könnte zwar eine vollständige Umsetzung der Biomasse bei höheren Trockenmasseanteilen ermöglichen, allerdings besteht die Gefahr von Katalysatorvergiftungen durch anorganische Bestandteile der Biomasse [28].

Es wird deutlich, dass sich die genaue Abstimmung der Prozessparameter entscheidend auf eine wirtschaftliche und technische Bewertung des Prozesses auswirkt. Bedenken muss man zudem, dass es noch keine Betriebserfahrungen im angestrebten kommerziellen Maßstab gibt. Daher sollte die Vergasungsanlage auf einem möglichst robusten Prozess basieren. Es zeichnet sich ab, dass ein solcher Prozess in Richtung eines Druckes von bis zu 35 MPa und einer Temperatur bis zu 700 °C geht.

Aus EP 1 772 202 A1 ist ein "Verfahren zur Erzeugung von Methan und/oder Methanhydrat aus Biomasse" bekannt, welches die nachfolgenden Verfahrensschritte aufweist:

a) aus der Biomasse wird ein Biomassebrei unter Einstellung eines gewünschten Trockenmasseanteils hergestellt,
b) der Biomassebrei wird unter Druck gesetzt,
c) zur Verflüssigung der festen organischen Bestandteile des Biomassebreis wird der Biomassebrei unter Druck erhitzt,

d) der so unter Druck gesetzte und erhitzte Biomassebrei wird weiter auf mindestens die der Mischung eigene kritische Temperatur erhitzt,

e) unter Druck und erhöhter Temperatur werden dabei ausgefällte Feststoffe von der fluiden Phase abgetrennt, und

f) mittels eines Reaktors wird unter Druck und erhöhter Temperatur mindestens ein Teil der restlichen fluiden Phase zu einem methanreichen Gas vergast.

Die Offenlegungsschrift DE 10 2012 013 000 A1 beschreibt einen "Prozess zur kombinierten Herstellung von Wasserstoff und Ethylen". Diese Erfindung betrifft ein Verfahren zur Herstellung von Wasserstoff aus Biomasse, umfassend die Schritte: Bereitstellen einer Biomassemaische, Verdichten der Maische auf mindestens 250 bar, Vorwärmen der Biomassemaische auf eine Temperatur von 200°C bis 350°C, Hydrolyse der Maische, wobei die organischen Bestandteile der Biomasse verflüssigt werden, Abtrennen der nicht gelösten Feststoffe aus der hydrolysierten Biomassemaische, Erhitzen der hydrolysierten Biomassemaische auf eine Temperatur von mindestens 450°C, Vergasung der hydrolysierten Biomassemaische, wobei die Biomasse zu einem Produktgasstrom umfassend Wasserstoff, Methan und Kohlendioxid umgesetzt wird und Kühlen des Produktgasstroms. Erfindungsgemäß ist vorgesehen, dass die Vergasung im überkritischen Wasser in einem Temperaturbereich von 450°C bis 700°C in Anwesenheit eines Katalysators stattfindet, bevorzugt ein Monolith.

Bekannt ist weiterhin ein Verfahren zur hydrothermischen Umwandlung von Biomasse aus der WO 2018/115593 A1. Dieses Verfahren umfasst die Schritte der Unterziehung des Ausgangsmaterials einer partiellen Nassoxidation in einer partiellen Nassoxidationseinheit, des Rückgewinnens eines stromabwärtigen Produkts aus der Einheit und des Zuführens mindestens eines Teils des stromabwärtigen Produkts zu einem thermochemischen Umwandlungsreaktor, wo es einer überkritischen Wasservergasung oder hydrothermalen Verflüssigung unterworfen wird, um Biomasseumwandlungsprodukte herzustellen. Das vorliegende Verfahren kann zur Behandlung von Biomasse wie Lignocellulose-Biomasse aus verschiedenen Industriebereichen sowie von Biomasse aus der Landwirtschaft zur Herstellung von wertvollen Produkten wie Bioöl und Synthesegas eingesetzt werden.

Aufgabe der Erfindung ist es, ein Verfahren zur Vergasung und Verstromung von feuchter Biomasse mit überkritischem Wasser zu finden, wobei der Stand der Technik als Voraussetzung gegeben ist und dahingehend verbessert wird, dass eine Verfahrenslösung entwickelt wird, welche in ihren Abläufen die reibungslose Gewinnung von Elektroenergie bei der Vergasung von feuchten Biomassen mit überkritischem Wasser realisiert.

Die Aufgabe wird dadurch gelöst, dass ein Verfahren zur Vergasung und Verstromung von feuchter Biomasse mit überkritischem Wasser realisiert wird, wonach der Patentanspruch 1 umgesetzt wird.

Dabei wurde ein Verfahren zur Vergasung und Verstromung von feuchter Biomasse mit überkritischem Wasser so entwickelt,

- dass wobei ein Edukt der Vergasungsanlage gegeben ist, welches sich aus Trockenmasse und Wasser zusammensetzt und um eine konstante Biomassekonzentration zu erreichen, wird die zu vergasende Biomasse je nach Wassergehalt noch mit Wasser verdünnt oder mit trockenmassehaltiger Biomasse angereichert, und nach einer Vorkonditionierung durch Zerkleinerung und Mischung der Biomassesuspension liegt ein pumpfähiges, einheitliches Edukt vor, welches anschließend auf einen Druck von etwa 27 bar gebracht und einem ersten Wärmeübertrager zugeführt wird, welcher die Suspension auf 225 °C erhitzt und nachfolgend bei dieser Temperatur die Biomassesuspension in den Verflüssigungsreaktor geleitet wird, worin sie 30 min auf der Eingangstemperatur gehalten wird, und anschließend wird die Suspension auf den Vergasungsdruck von ca. 350 bar gebracht und nachfolgend durchläuft das Biomassegemisch einen zweiten Wärmeübertrager, in dem es durch Wärmeübertragung mit dem Vergasungsprodukt auf eine Temperatur von etwa 630 °C erhitzt wird und dabei geht das Wasser in den überkritischen Zustand über und eine Vergasungsreaktion beginnt, wobei die Löslichkeit des Wassers für organische Stoffe durch den Übergang in den überkritischen Zustand erhöht wird, dabei sinkt die Löslichkeit für Salze, die dementsprechend zu einem großen Teil ausfallen und mit in den Vergasungsreaktor geschleust werden, um die Vergasungstemperatur von 700 °C zu erreichen, ist eine zusätzliche Wärmezufuhr notwendig, die durch elektrische Heizelemente im Vergasungsreaktor bereitgestellt wird, und anschließend ist nach Durchlaufen des Vergasungsreaktors die Biomasse zu einem Großteil in Gase umgesetzt, die insbesondere Gase, wie Kohlenstoffdioxid, Methan, Wasserstoff und Ethan enthält und weiterhin besteht das Vergasungsprodukt hauptsächlich aus nicht umgesetztem überkritischen Wasser und ausgefallenen Salzen und nicht vergasten organischen Partikeln, und nachfolgend werden die ausgefallenen Salze mittels eines Sumpfabzugs als Salzlösung abgeschieden, und anschließend erfolgt die Kühlung des Produktes durch Wärmerückgewinnung in den beiden Wärmeübertragern auf entsprechend 275 °C und 65 °C bei unverändert hohem Druckniveau, wobei ab einer Temperatur von 374 °C Wasser im flüssigen Aggregatzustand vorliegt und daher nach der Wärmerückgewinnung in einem Wasserabscheider vom Produktgas separiert werden kann, das vorhandene Produktgas besteht nunmehr hauptsächlich aus Kohlenstoffdioxid, Methan, Wasserstoff und Ethan, und die notwendige $CO_2$-Abtrennung zur Gasaufbereitung erfolgt anschließend durch Kühlung, und durch eine Kältemaschine wird das Produktgas auf eine Temperatur von unter 30 °C gekühlt, da bei dieser Temperatur und dem vorherrschenden hohen Druck sowohl $CO_2$ als auch Ethan flüssig sind und im $CO_2$- und Ethan-Abscheider durch Phasentrennung abgeschieden werden, das verbleibende Brenngas, das sich aus Methan und Wasserstoff zusammensetzt, kann nun in den vom Vergasungsprozess unabhängigen Verstromungsprozess verwertet werden.

Weiterhin ist erfindungswesentlich, dass insbesondere Detaillösungen realisiert werden. Dabei werden folgende Verfahrens- und Hardwarelösungen ausgeführt:

a. Aufteilung der gesamten Wärmeübertragung auf 2 Wärmeübertrager mit unterschiedlichen Arbeitsdrücken

b. Halten der Eingangstemperatur nach dem ersten Wärmeübertrager zur Verbesserung der Viskosität der Suspension

c. Weitere Zerkleinerung der Biomasse nach dem ersten Wärmeübertrager

d. Besondere Bauart des zweiten Wärmeübertragers für hohe Temperaturen (Eingangstemperatur 225 °C). Zur Entkopplung von Druck und Temperatur ist der der Wärmeübertrager gekapselt. Die Hülle der Außenkapsel sieht die volle Druckdifferenz zwischen Innendruck des Wärmeübertragers und der Umgebung. Die Kapsel wird mit einem Inertgas mit möglichst geringer Wärmeleitung gefüllt, zum Beispiel Stickstoff. Der Stickstoff wird auf den gleichen Druck wie die Suspension gebracht (ca. 350 bar). Dadurch kann der Wärmeüberträger innerhalb der Kapsel dünnwandig ausgeführt werden, da kein Druckdifferenz innerhalb der Kapsel besteht. Die inneren Rohre des Wärmetauschers sind bzgl. des Differenzdruckes weitgehend drucklos. Dadurch können einfachere und preiswertere Materialien für die Rohre verwendet werden und diese halten auch deutlich länger. Die Rohre in denen sich im Wärmetauscher die Suspension befindet, werden in geeigneter Weise gegen Korrosion beschichtet, bzw. behandelt, ohne dass die Wärmeübertragung zu sehr verringert wird.

e. Der Vergaser: Auch der Vergaser besteht wie in 3.2. beschrieben aus einem doppelwandigen Gefäß, wobei das innere Gefäß innen gegen Wärme und Korrosion soweit isoliert ist, wie dies sinnvoll möglich ist. Ein geeignetes Material für diese Isolation könnte zum Beispiel Glaskohlenstoff sein.

f. Bei der Gasseparation, bei der die Produktgase heruntergekühlt werden, bis ein Flüssigkeitsgemisch aus flüssigem Ethan und flüssigem $CO_2$ abgezogen werden kann. Ferner die folgende weitere Kühlung des Flüssigkeitsgemisches und die Separierung in flüssiges Ethan, Trockeneis, sowie gasförmiges Kohlendioxid.

g. Der Hochtemperaturwärmeübertrager (zweiter Wärmeübertrager) und der Vergasungsreaktor werden in einer gemeinsamen Druckkapsel untergebracht, um innerhalb der Kapsel die gesamte Teilanlage ohne Differenzdruck nach außen betreiben zu können. Auch diese Kapsel wäre mit einem geeigneten Gas wie zum Beispiel Stickstoff zu füllen.

Die Erfindung wird an einer erfinderischen Lösung beschrieben, wobei folgende Figuren gegeben sind:

Figur 1     Dampfdruckkurve von Wasser
Figur 2     Darstellung hydrothermaler Verfahren über der Dampfdruckkurve von Wasser
Figur 3     schematische Darstellung des Abbaus von Cellulose und Lignin in überkritischem Wasser
Figur 4     schematische Darstellung der Umsetzung des Edukts

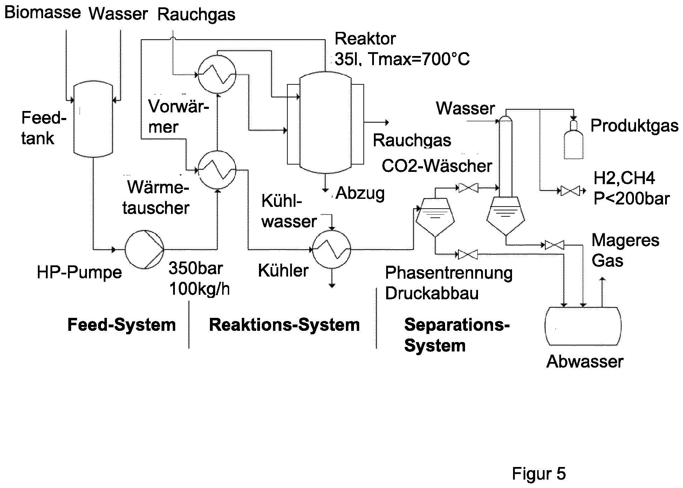

Figur 5     Fließbild
Figur 6     grundlegende Gliederung des Prozesses
Figur 7     schematische Darstellung der Zirkulation der nicht-vergasten Trockenmasse
Figur 8     Darstellung des Feed- und Konditionierungssystems
Figur 9     T-Q-Diagramm von Wärmeübertrager 1
Figur 10    Darstellung des Reaktions- und Wärmerückgewinnungssystems
Figur 11    T-Q-Diagramm von Wärmeübertrager 2 bei 250 bar und 350 bar
Figur 12    Schema des Vergasungsreaktors
Figur 13    Separationssystem für den Produktgasstrom nach der Wasserabscheidung
Figur 14    Dampfdruckkurve
Figur 15    Prozessschema.

3 Erfinderische Lösung

3.1 Grundlegender Prozess

Es ist eine Gliederung der Vergasungsanlage in drei Prozesse gegeben:

- Feed- und Konditionierungssystem,
- Reaktions- und Wärmerückgewinnungssystem und

- Separationssystem.

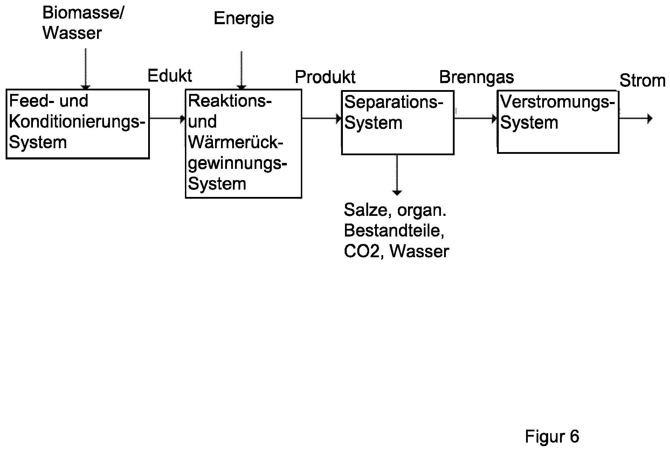

Zusätzlich ist ein Verstromungssystem zur Verwertung des sich ergebenden Brenngases vorgesehen - siehe Figur 6: grundlegende Gliederung des Prozesses.

Das Feed- und Konditionierungssystem sichert dabei eine geeignete Vorkonditionierung der Biomasse und stellt ein möglichst homogenes, pumpbares Edukt kontinuierlich zur Verfügung, welches den Anforderungen des Reaktionssystems genügt.

Das Reaktions- und Wärmerückgewinnungssystem dient zur Vergasung der Biomasse unter den spezifischen Reaktionsbedingungen. Dabei muss dem Teilsystem Energie zugeführt werden, um das für die Vergasung erforderliche hohe Druck- und Temperaturniveau zu erreichen. Es ergibt sich ein Produkt, welches sich vor allem aus überkritischem Wasser, Kohlenstoffdioxid und den erwünschten Brenngasen Methan und Wasserstoff zusammensetzt [35].

In der Folge müssen die Brenngase im Separationssystem von den anderen Bestandteilen des Produktes getrennt werden. Weiterhin müssen im Reaktions- und Wärmerückgewinnungssystem ausgefallene Salze separiert werden.

Ein weiterer Bestandteil des Prozesses ist das Verstromungssystem, welches die chemische Energie des sich aus dem Vergasungsprozess ergebenden Brenngases in elektrische Energie umwandelt. Dieses sollte gut auf Art und Menge der sich ergebenden Brenngase abgestimmt sein, um einen effizienten Gesamtprozess zu ermöglichen.

3.2 Beschreibung der erfinderischen Lösung

3.2.1 Einleitung

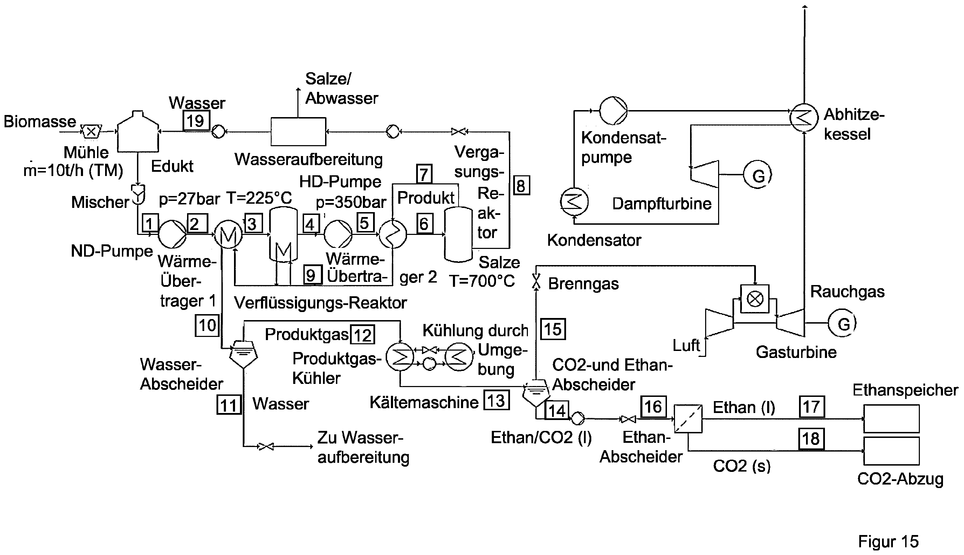

Im Folgenden soll das erarbeitete Prozessschema anhand der Figur 15 beschrieben werden. Charakteristische Punkte sind im Schema nummeriert und werden in der Beschreibung an den entsprechenden Stellen in runden Klammern aufgeführt.

Nach einer allgemeinen Beschreibung des Prozessschemas folgen genauere Ausführungen zu den einzelnen Subsystemen und Komponenten sowie eine technische Bewertung des Prozesses.

3.2.2 Beschreibung des kompletten Prozessschemas

Das Edukt der Vergasungsanlage setzt sich aus Trockenmasse und Wasser zusammen. Um eine konstante Biomassekonzentration zu erreichen, muss die zu vergasende Biomasse je nach ursprünglichem Wassergehalt noch mit Wasser verdünnt oder mit trockenmassehaltiger Biomasse angereichert werden. Bei einem Trockenmassestrom von 10 t/h und einer Biomassekonzentration von 10 % ergibt sich beispielsweise ein Wasserstrom von 90 t/h. Nach einer entsprechenden Vorkonditionierung durch Zerkleinerung und Mischung der Biomassesuspension liegt ein pumpfähiges, einheitliches Edukt vor, das den Anforderungen der Vergasungsanlage genügt (1). Anschließend wird das Edukt mit der ND-Pumpe auf einen Druck von etwa 27 bar gebracht (2) Damit wird sichergestellt, dass das Wasser der Suspension im anschließenden Wärmeübertrager im flüssigen Aggregatzustand verbleibt. In diesem ersten Wärmeübertrager wird die Suspension auf eine Temperatur von 225 °C erhitzt (3). Bei dieser Temperatur gelangt die Biomasse-Suspension in den Verflüssigungsreaktor. Hier wird sie 30 min auf der Eingangstemperatur gehalten.

Dabei laufen Hydrolyse-Reaktionen ab, die eine Verringerung der Viskosität der Biomassesuspension zur Folge haben und somit eine Verflüssigung des Biomassegemisches bewirken (4). Anschließend wird die Suspension mit der HD-Pumpe auf den Vergasungsdruck von ca. 350 bar gebracht (5).

Nun durchläuft das Biomassegemisch einen zweiten Wärmeübertrager, in dem es durch Wärmeübertragung mit dem Vergasungsprodukt auf eine Temperatur von etwa 630 °C erhitzt wird (6). Dabei geht Wasser in den überkritischen Zustand über und Vergasungsreaktionen beginnen abzulaufen. Während die Löslichkeit des Wassers für organische Stoffe durch den Übergang in den überkritischen Zustand erhöht wird, sinkt die Löslichkeit für Salze, die dementsprechend zu einem großen Teil ausfallen und mit in den Vergasungsreaktor geschleust werden.

Um die Vergasungstemperatur von 700 °C zu erreichen, ist eine zusätzliche Wärmezufuhr notwendig, die durch elektrische Heizelemente im Vergasungsreaktor bereitgestellt wird.

Nach Durchlaufen des Vergasungsreaktors ist die Biomasse zu einem Großteil in Gase umgesetzt. Da kein Katalysator zum Einsatz kommt, ist die Vergasung bei höheren Trockenmassegehalten allerdings nicht vollständig. Neben den entstehenden Gasen Kohlenstoffdioxid, Methan, Wasserstoff und Ethan besteht das Vergasungsprodukt hauptsächlich aus nicht umgesetztem überkritischen Wasser, darin gelösten Salzen und nicht vergasten organischen Partikeln (7).

Im Prozess ausgefallene Salze werden mittels eines Sumpfabzugs als Salzlösung abgeschieden (8). Anschließend erfolgt die Kühlung des Produktes durch Wärmerückgewinnung in den beiden Wärmeübertragern auf entsprechend 275 °C (9) und 65 °C (10) bei unverändert hohem Druckniveau. Ab einer Temperatur von 374 °C liegt Wasser dabei im flüssigen Aggregatzustand vor und kann daher nach der Wärmerückgewinnung in einem Wasserabscheider vom Produktgas separiert werden (11). Das Produktgas besteht nunmehr hauptsächlich aus Kohlenstoffdioxid, Methan, Wasserstoff und Ethan (12).

Die notwendige $CO_2$-Abtrennung zur Gasaufbereitung erfolgt anschließend durch Kühlung. Durch eine Kältemaschine wird das Produktgas auf eine Temperatur von unter 30 °C gekühlt (13). Bei dieser Temperatur und dem vorherrschenden hohen Druck sind sowohl $CO_2$ als auch Ethan flüssig und können im $CO_2$- und Ethan-Abscheider durch Phasentrennung abgeschieden werden (14).

Das verbleibende Brenngas, das sich aus Methan und Wasserstoff zusammensetzt, kann nun in den vom Vergasungsprozess unabhängigen Verstromungsprozess verwertet werden. Dazu kann beispielsweise ein GuD-Prozess (wie im Schema dargestellt) oder Gasmotor genutzt werden (15).

Weil Ethan für eine spätere Verstromung gespeichert werden soll, muss dieses aus dem zuvor abgeschiedenen Ethan/$CO_2$-Gemisch separiert werden (14). Dazu wird der Druck abgesenkt, bis man auf die Dampfdruckkurve von $CO_2$ trifft. Bei weiter sinkendem Druck beginnt $CO_2$ zu sieden. Ein Teil des Kohlenstoffdioxids wird dadurch gasförmig, wobei der verbleibenden Flüssigkeit die für die Phasenänderung notwendige Verdampfungswärme entzogen wird. Die Temperatur des Ethan/$CO_2$-Gemisches sinkt somit mit abnehmendem Druck, bis der Tripelpunkt von $CO_2$ erreicht ist (- 56,6 °C; 5,19 bar). $CO_2$ liegt bei weiterer Druckminderung ausschließlich im festen und gasförmigen Zustand vor. Nach abermaliger Phasentrennung erhält man flüssiges Ethan, gasförmiges $CO_2$ und festes $CO_2$ (16)-(18). Dieser Prozess kann in Richtung einer größeren Menge von Trockeneis (festes $CO_2$) optimiert werden, wenn nach der Abtrennung des flüssigen Ethan/$CO_2$-Gemisches noch eine Kühlung des 30 °C warmen Gemisches erfolgt. Das separierte flüssige Ethan (16) kann gelagert werden, um eine höhere Flexibilität der Verstromung zu ermöglichen. Entstandenes Trockeneis soll als Nebenprodukt der Vergasung verkauft werden (17).

Das während des Prozesses abgeschiedene Wasser (8), (11) durchläuft nach der erforderlichen Druckabsenkung eine Wasseraufbereitung, während aus der im Vergasungs-Reaktor abgeschiedenen Salzlösung Mineralien wie Phosphor separiert werden können. Da das abgeschiedene Wasser nicht vergaste organische Bestandteile enthält, sollte es nach Möglichkeit zirkuliert werden, um eine möglichst hohe Kohlenstoffumsetzung zu erzielen und die Abwassermenge zu minimieren (18).

3.2.3 Feed-und Konditionierungssystem am Beispiel von Maissilage

Da Maissilage üblicherweise einen Trockenmasseanteil von mehr als 30 % besitzt, ist eine Verdünnung mit Wasser notwendig, um ein pumpfähiges Edukt zu erhalten. Gleichzeitig sollte der Trockenmasseanteil des Eduktes aber möglichst hoch sein, um die Menge des durch den Prozess geschleusten und damit zu erhitzenden Wassers zu reduzieren. Als untere Grenze für einen wirtschaftlich sinnvollen Betrieb einer hydrothermalen Vergasungsanlage wird generell ein organischer Trockenmasseanteil von 10 % angenommen [16] . Für die Berechnung des vorliegenden Prozesses wurde ein Trockenmasseanteil des Eduktes von 15 % gewählt. Bei dieser Biomasse-Konzentration ist die Viskosität der sich ergebenden Suspension gering genug, um deren Pumpfähigkeit zu gewährleisten, während gleichzeitig die genannte untere Grenze eines ökonomisch sinnvollen Betriebes deutlich überschritten wird.

In Tabelle 3-1 sind die Zusammensetzung der Maissilage-Trockenmasse und der nach der Näherungsformel von Boie berechnete Heizwert dargestellt.

Tabelle 2-1: Zusammensetzung der Maissilage-Trockenmasse und berechneter Heizwert (Werte aus [6])

| C | O | H | N | S | Asche | Berechneter Heizwert (kJ/kg) |
|---|---|---|---|---|-------|------------------------------|
| 44,9 | 44,6 | 6,4 | 0,95 | 0,28 | 2,87 | 16901 |

Bei einem Trockenmasse-Eintrag von 10t/h ergibt sich somit eine in den Prozess eingetragene thermische Leistung von 46,9 MW.

Da die Gasausbeute der Vergasung von Maissilage bei 700 °C und einer Konzentration von 15 % bei etwa 82 % liegt, verbleibt fast 1/5 des im Feed eingebrachten Kohlenstoffs im Wasser des Produktes [6]. Das im Wasserabscheider abgetrennte Wasser sollte deshalb zirkuliert werden, um eine möglichst hohe Kohlenstoffumsetzung des Edukts zu gewährleisten [36] .

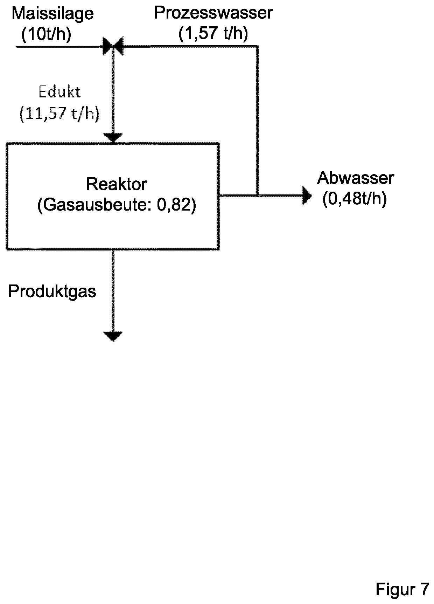

Die Maissilage wird mit dem zirkulierten Wasser verdünnt, um den erwünschten Trockenmasse-Gehalt des Edukts von 15 % zu erzielen - siehe Figur 7: schematische Darstellung der Zirkulation der nicht-vergasten Trockenmasse.

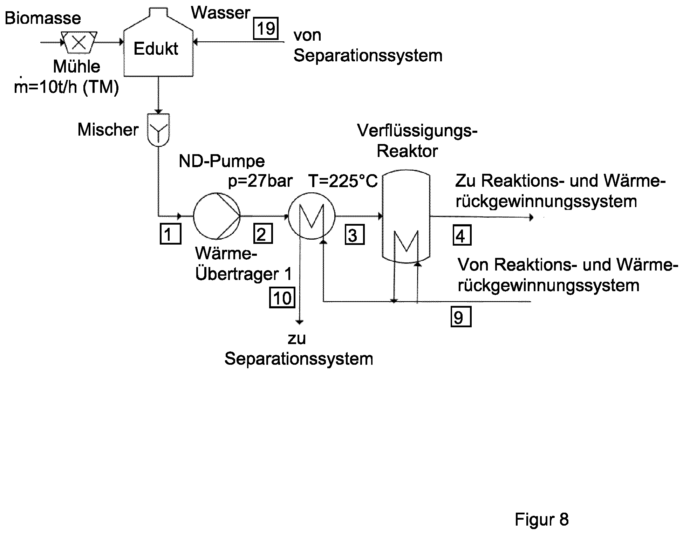

Bei einem Maissilage-Eintrag von 10 t/h (TM) und einem TM-Gehalt der Maisilage von 38 % bedeutet dies, dass 1,57 t/h der im abgeschiedenem Wasser enthaltenen Trockenmasse zirkuliert werden kann und somit nur 0,48 t/h TM durch das Abwasser abgeschieden wird - siehe Figur 7. Durch diese Maßnahme steigt der Gesamt-Kohlenstoff-Vergasungsumsatz auf 95,2 %. Das Vergasungssystem muss somit auf einen Eduktstrom von 11,57 t/h (TM) eingestellt werden - siehe Figur 8: Darstellung des Feed- und Konditionierungssystems.

In Figur 8 ist das Feed- und Konditionierungssystem abermals dargestellt.

Das Edukt, das sich aus der eingesetzten Biomasse und dem rückgeführten Wasser zusammensetzt, muss durch Vermischung homogenisiert und zerkleinert werden. Eine Oberflächenvergrößerung ist ein unerlässlicher Schritt bei der Rohstoffaufbereitung und begünstigt die Vergasung mit überkritischem Wasser [6]. Weiterhin ist eine geringe Partikelgröße Voraussetzung für die Pumpbarkeit des Edukts.

Die Verringerung der Partikelgröße kann dabei je nach Art der Biomasse durch verschiedene Methoden erreicht werden. Unverdichtete Biomassen werden vor allem durch Schneidmühlen zerkleinert, die durch die schneidende Arbeitsweise auch für faserhaltige Biomassen geeignet sind [4]. Weiterhin können Kolloidmühlen zur Nassvermahlung verwendet werden, um Biomassepartikel zu verkleinern und Suspensionen zu homogenisieren. Dabei können jeweils durch verschiedene Schneid- und Mahlwerkzeuge unterschiedlich feine Partikelgrößen erzielt werden. Um die Pumpbarkeit des Edukts zu gewährleisten, sollte eine Partikelgröße von weniger als 100 μm angestrebt werden.

Die Darstellung von Mühle und Mischer im Prozessschema ist dabei qualitativ zu verstehen. Anordnung und Art der Mühle sind von den Eigenschaften der zu vergasenden Biomasse abhängig und können je nach eingesetzter Biomasse variieren.

Nach Zerkleinerung und Homogenisierung des Edukts wird die Suspension durch die ND-Pumpe auf einen Druck von 27 bar gebracht. Da es sich bei der Biomasse-Suspension um eine hochviskose Flüssigkeit handelt, bietet sich dabei der Einsatz einer Exzenterschneckenpumpe an. Bei maximalen Proessbedingungen von 200 bar und 500 m³/h zeichnet sich diese Verdrängerpumpe durch eine hohe Wirtschaftlichkeit und Robustheit aus [37].

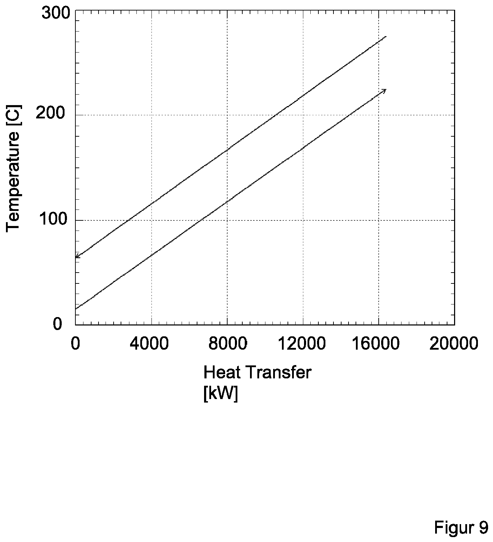

Nun erfolgt die Erwärmung des Eduktes in Wärmeübertrager 1 auf eine Temperatur von 225 °C. Das T-Q-Diagramm der Komponente ist in Figur 9 dargestellt. Zwischen Edukt und Produkt wird ein Energiestrom von etwa 16,4 MW übertragen, wobei sich das Produkt auf etwa 64 °C abkühlt - siehe Figur 9: T-Q-Diagramm von Wärmeübertrager 1.

Als robuster Wärmeübertrager, der auch unter hohem Druck funktionsfähig ist, bietet sich ein Rohrbündelwärmeübertrager an. Um der viskosen Biomassesuspension eine definierte Strömungsführung vorzugeben, sollte der Feed in den Rohren des Rohrbündels fließen, während das heiße Produkt den Außenraum durchfließt [3]. Dabei sollte die Mindest-Strömungsgeschwindigkeit der Biomasse-Suspension 1 m/s betragen, um Fouling an den Wärmeübertragungsflächen zu vermeiden [3]. Weiterhin sollten Rohrdurchmesser vergleichsweise groß gewählt werden, um die Verstopfungsgefahr der Rohre durch den hochviskosen Feed zu minimieren.

Anschließend erfolgt die Verflüssigung des Edukts im Verflüssigungs-Reaktor. In diesem wird die heiße Suspension für eine Verweilzeit von etwa 30 min auf der Eingangstemperatur von 225 °C gehalten. Auftretende Wärmeverluste könnten dabei durch Wärmeübertragung eines Teilstroms des 275 °C heißen Produktes, das anschließend in Wärmeüberträger 1 eintritt, ausgeglichen werden.

Um einen kontinuierlichen Prozess zu gewährleisten, müssen mehrere Reaktorbehälter verwendet werden, die abwechselnd gefüllt und entleert werden. Im Fall von zwei Druckbehältern und einer Verweilzeit von 30 min muss ein Behälter demnach den eingehenden Eduktstrom einer halben Stunde aufnehmen können.

Die thermische Behandlung des Edukts hat eine starke Verringerung der Viskosität der Suspension zur Folge, wodurch der Druckverlust im gesamten Vergasungssystem reduziert wird. Dies hat unter anderem Kosteneinsparungen in Bezug auf nachfolgende Pumpen und Rohre zur Folge [32]. Weiterhin ist eine Begünstigung der anschließenden Vergasung durch die Verflüssigung zu erwarten, woraus höhere Wasserstoff- und Methanerträge und eine niedrigere $CO_2$-Produktion der Vergasung resultieren [32].

Alternativ zur ausschließlichen Zerkleinerung der Biomasse vor der ND-Pumpe kann eine Zerkleinerung der Biomasse teilweise auch im, Verflüssigungsreaktor, bzw. danach erfolgen. Die Zerkleinerung vor dem Verflüssigungsreaktor muss jedoch so weit erfolgen, dass eine Verflüssigung der gesamten Biomasse gegeben ist. Insofern dient die Zerkleinerung, bzw. das mahlen nach dem Reaktor lediglich der weiteren Reduktion der Partikelgröße.

Eine höhere Temperatur im Verflüssigungs-Reaktor von beispielsweise 250 °C könnte dabei die Verflüssigung und die damit einhergehenden positiven Effekte weiter verstärken. Allerdings stiegen dadurch auch die Eingangstemperatur der HD-Pumpe, sowie auftretende Wärmeverluste und Druck im Verflüssigungsreaktor.

3.2.4 Reaktions- und Wärmerückgewinnungssystem

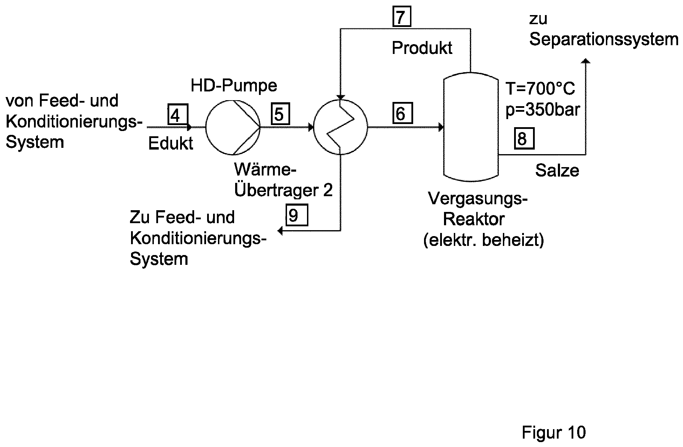

Das Reaktions- und Wärmerückgewinnungssystem beinhaltet die HD-Pumpe, Wärmeübertrager 2 und den Vergasungsreaktor - siehe Figur 10: Darstellung des Reaktions- und Wärmerückgewinnungssystems.

Das 225 °C heiße, thermisch vorbehandelte Edukt aus dem Verflüssigungsreaktor wird mit der HD-Pumpe auf einen Druck von etwa 357 bar gebracht. Die Druckverluste bis zum Vergasungsreaktor betragen dabei etwa 7 bar, sodass die Reaktion bei einem Druck von mindestens 350 bar stattfindet. Der im Vergleich zum kritischen Druckniveau (221 bar) hohe Vergasungsdruck resultiert aus dessen positiven Einfluss auf die Wärmeübertragung in Wärmeübertrager 2.

Der große Druckanstieg von über 300 bar in der HD-Pumpe macht den Einsatz einer Kolbenpumpe erforderlich.

Dabei sollte die pulsierende Betriebsweise durch den Einsatz einer Mehrfachpumpe relativiert werden [37].

Anschließend durchläuft die geförderte Suspension Wärmeübertrager 2 und wird in diesem durch Kühlung des Vergasungsproduktes auf eine Temperatur von 635 °C erhitzt. Das Produkt wird dabei von der Vergasungstemperatur (700 °C) auf etwa 275 °C gekühlt. Der dabei übertragene Wärmestrom von 45,2 MW macht deutlich, dass Wärmeübertrager 2 zentraler Bestandteil der Vergasungsanlage ist. Einige Arbeiten weisen darauf hin, dass die Auslegung des Wärmeübertragers entscheidenden Einfluss auf Effizienz und Wirtschaftlichkeit einer hydrothermalen Vergasungsanlage hat [3, 21].

Ein effizienter Vergasungsprozess kann nur erreicht werden, wenn ein möglichst großer Teil der Wärme der Reaktionsprodukte zurückgewonnen werden kann, was sich in einer geringen Temperaturspreizung zwischen Edukteingangs- und Produktaustrittstemperatur ausdrückt. Allerdings muss gleichzeitig der kritische Temperaturbereich der Teer- und Koksbildung, der zwischen 330 und 370 °C liegt, möglichst schnell durchschritten werden, um einen möglichst hohen Kohlenstoffumsatz zu gewährleisten [16]. Die Verweilzeit im Wärmeübertrager sollte deswegen deutlich unter 30 s liegen [3].

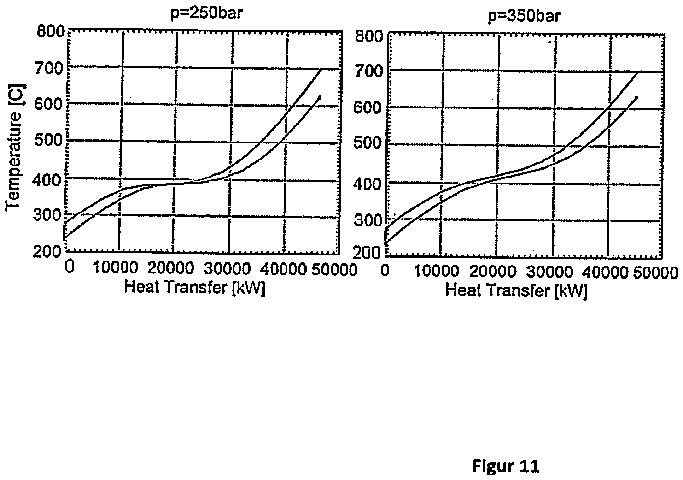

Diese zweite Anforderung an den Wärmeübertrager bedingt den im Vergleich zum kritischen Druck (221 bar) hohen angedachten Vergasungsdruck von 350 bar. In Figur 11 ist das T-Q-Diagramm des Wärmeübertragers bei 250 bar und 350 bar dargestellt - siehe Figur 11: T-Q-Diagramm von Wärmeübertrager 2 bei 250 bar und 350 bar.

Während der geringere Druck eine sehr geringe Wärmeübertragung und eine dementsprechend lange Verweilzeit nahe der kritischen Temperatur nach sich zieht, führt ein höherer Druck zu einer größeren Temperaturdifferenz zwischen Edukt- und Produktstrom und einer dementsprechend schnelleren Wärmeübertragung. Dies ist auf den peakförmigen Verlauf der Wärmekapazität von Wasser im kritischen Bereich zurückzuführen, der bei höheren Drücken deutlich abgeschwächt ist [3].

Als Endgrädigkeit zwischen eintretendem Edukt und austretendem Produkt wurde eine Temperaturdifferenz von 50 K gewählt. Bei einer energetisch effizienten Wärmeübertragung bleibt die Länge des Wärmeübertragers somit überschaubar. Die Mindestgeschwindigkeit des Eduktes in den Wärmeübertragerrohren beträgt 1 m/s, um Fouling zu vermeiden. Da ein Großteil der ausfallenden Salze nach Durchlaufen des Wärmeübertragers im Reaktor abgeführt wird, ist die Foulinggefahr in dem vom Produkt durchflossenem Außenraum wesentlich geringer. Um die Länge des Wärmeübertragers und damit die Verweilzeit im kritischen Temperaturbereich zu minimieren, sind sehr geringe Rohrinnendurchmesser im Rohrbündel erforderlich. Dieser Zusammenhang wird in Formel 3-1 deutlich [3]:

$$ l = \frac{\rho u_{min} d_i A_w}{4\dot{m}} \qquad\qquad 2\text{-}6 $$

Die Verweilzeit sinkt proportional zur Rohrlänge 1 und damit zum Rohrinnendurchmesser $d_i$. Ein geringer Rohrinnendurchmesser erscheint dabei zulässig, da die Viskosität des Feeds und damit die Verstopfungsgefahr durch die vorangegangene thermische Behandlung deutlich reduziert sind. Probleme können allerdings im überkritischen Wasser ausfallende Salze bereiten, die sich bevorzugt an den heißen Wärmeübertragungsrohren absetzen [27]. In regelmäßigen Abständen sollte der Wärmeübertrager dementsprechend gereinigt werden. In Tabelle 3-2 sind charakteristische Werte des Wärmeübertragers dargestellt.

Tabelle 2-2: Charakteristische Werte von Wärmeübertrager 2

| | |
|---|---|
| Rohrinnendurchmesser $d_i$/mm | 5 |
| Rohrbündellänge l/m | 4,7 |
| Rohranzahl N | 3050 |
| Durchmesser Shell(Außenrohr)/mm | 803 |
| Verweilzeit t/s | 9,4 |

Die geringe Verweilzeit von 9,4 s im Wärmeübertrager zeigt, dass der kritische Temperaturbereich der Teer- und Koksbildung bei sehr kleinen Rohrinnendurchmessern ausreichend schnell durchschritten wird.

Zu bedenken ist, dass aufgrund der hohen Temperaturen des Edukts im Wärmeübertrager ein großer Teil der Umsetzung der Biomasse in Gasprodukte bereits vor dem Durchlaufen des Vergasungsreaktors stattfindet. Die hohen Temperaturen, ausfallende Salze und entstehende Gase erfordern dabei hochwarmfeste und korrosionsbeständige Materialien. Gegebenenfalls ist, wie im Vergasungsreaktor vorgesehen, eine Trennung von druck- und temperaturbeanspruchten Bauteilen sinnvoll, um den Einsatz preisintensiverer korrosionsbeständiger Materialien zu ermöglichen.

Nach Wärmeübertrager 2 durchläuft die Biomassesuspension den Vergasungsreaktor und wird in diesem mit elektrischen Heizelementen auf 700 °C erhitzt. Die notwendige zuzuführende Energiemenge beträgt dabei etwa 3,693 MW.

Aufgrund des hohen Temperaturniveaus können auch komplexe, hoch konzentrierte Biomassesuspensionen zu einem großen Teil vergast werden. Die Kohlenstoffumsetzung der Maissilage-suspension mit 15 % Trockenmasse beträgt etwa 82 % [6]. Es ergibt sich folgende Gaszusammensetzung:

Tabelle 2-3: Gaszusammensetzung in Vol.-% (Werte abgeschätzt aus [6])

| $CO_2$ | Methan | Wasserstoff | Ethan |
|---|---|---|---|
| 46 % | 28 % | 21 % | 5 % |

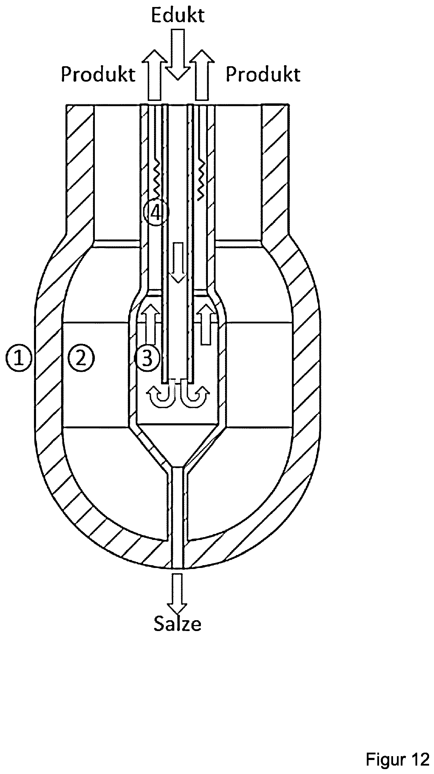

Die hohe Vergasungstemperatur erfordert den Einsatz hochwarmfester und korrosionsbeständiger Materialien. Da zusätzlich ein Druck von 350 bar vorliegt, sollte eine Teilung des Reaktors in druck- und temperaturbelastete Teile erfolgen, um Materialkosten zu senken und eine möglichst hohe Korrosionsbeständigkeit des Reaktors sicherzustellen. Salze sollten möglichst aus dem Reaktor entfernt werden, bevor die Höchsttemperatur von 700 °C erreicht wird [38]. In Figur 12 ist ein Schema des Vergasungsreaktors dargestellt.

Der Reaktor ist in einen Außenbehälter 1 und einen Innenbehälter 3 mit keramischer (oder sonstiger geeigneter hochwarmfester Isolation) an der Innenwand gegliedert. Während der Außenbehälter die Druckstabilität des Reaktors gewährleistet, sichert der Innenbehälter eine hohe Korrosion- und Temperaturbeständigkeit des Bauteils. Die Kontakte zwischen Innen- und Außenbehälter sollten dabei auf ein Minimum beschränkt sein, um die Wärmeleitung zwischen den Behältern möglichst gering zu halten.

Dort, wo der Kontakt unvermeidlich ist, ist ggf. eine Kühlung vorzusehen, um die Temperatur des Außenbehälters so niedrig zu halten, dass die Festigkeit des Materials nicht bzw. nur unwesentlich verringert wird.

Zwischen den Behältern befindet sich ein auf Vergasungsdruck komprimiertes Gas 2 mit einer geringen Wärmeleitfähigkeit (zum Beispiel Stickstoff), das als thermische Barriere zwischen Außen- und Innenbehälter dient und dafür sorgt, dass der Innenbehälter keinem Differenzdruck ausgesetzt ist.

Dieses Gas wird ggf. laufend gekühlt, falls die Temperaturbegrenzung des Außenbehälters dies erfordern sollte, wobei in den Zwischenraum zwischen beiden Behältern entsprechende Wärmeübertrager eingebaut sind, die mit Wasser als Kühlmedium betrieben werden. Hierbei führen entsprechende Durchführungen durch den äußeren Behälter das Kühlwasser auf der einen Seite nach innen und auf der anderen Seite nach außen, so dass das Kühlwasser seinerseits außerhalb des Behälters seine Wärme per Wärmeübertrager an die Umgebungsluft abgeben kann. Falls notwendig, wird dies durch ein Gebläse unterstützt.

Nachdem das Edukt in den oberen Teil des Innenbehälters eingebracht wird, erfolgt nach Durchlaufen des Bauteils eine Umlenkung des Gemischs im unteren Teil des Behälters. Danach durchströmt es den äußeren Teil des Innenbehälters und wird durch elektrische Heizelemente 4 auf die Vergasungstemperatur von 700 °C erhitzt. Anschließend kann das Vergasungsprodukt aus dem Reaktor abgeführt werden.

Ausgefallene Salze sammeln sich bei der Umlenkung des Edukts im unteren Teil des Innenbehälters an und können stoßweise durch den Sumpfabzug abgezogen werden. Auf diese Weise werden etwa 90 % der ausgefallenen Salze separiert [36]. Bei den vorliegenden Prozessdaten wird so ein Salzmassestrom von etwa 383 kg/h abgeführt.

Materialien mit einer auch unter hydrothermalen Bedingungen ausgezeichneten Korrosionsbeständigkeit, die für den Bau des Innenbehälters in Frage kommen, sind Graphit, Glaskohlenstoff, kohlefaserverstärkter Kohlenstoff und sonstige Stoffe, die sowohl der Temperatur als auch der hochkorrosiven Umgebung standhalten können [26]. Darüber hinaus muss der Wärmeeintrag in den Innenbehälter minimiert werden, damit dieser seinerseits nur wenig Wärme in den Zwischenraum und an den Außenbehälter abgeben kann. Aufgrund der unterschiedlichen Anforderungen sind auch entsprechende Verbundstoffe oder die Schichtung mehrerer Materialien geeignet. So könnte zum Beispiel Zirkoniumoxid eine abrasions- und temperaturfeste Isolierschicht innen am Innenbehälter bilden, auf die dann die korrosionsfeste Schicht aufgebracht wird. Da der Innenbehälter nicht druckbeansprucht wird, kann er dünnwandig ausgeführt werden.

Der Außenbehälter kommt nicht mit der Biomasse-Suspension und den Reaktionsprodukten in Kontakt und ist thermisch von dem Innenbehälter weitgehend abgeschirmt. Als Material für den Außenbehälter kann somit kostengünstiger druckbeständiger Stahl verwendet werden.

Nach dem Reaktor durchläuft das heiße Reaktionsprodukt die beiden schon beschriebenen Wärmeübertrager und wird dabei abgekühlt.

3.2.5 Separationssystem

Die bei der Vergasung entstandenen Brenngase müssen aus dem Reaktionsprodukt isoliert werden, um eine effiziente Verstromung derselbigen zu ermöglichen. Ein Großteil des dabei abgetrennten Wassers sollte anschließend mit den darin enthaltenen gelösten Stoffen zirkuliert werden, um den Kohlenstoffumsatz der Anlage zu erhöhen und die Abwassermenge zu minimieren. Da die Wasserzuführung an den neuen Feed vor der ND-Pumpe stattfindet und der Druck des vorher abgeschiedenen Wassers dafür reduziert werden muss, findet vor der Wasserzuführung an den neuen Feed eine Entgasung des Wassers über mehrere Druckstufen statt. Die dabei freiwerdenden Gase werden, je nach Menge und Zusammensetzung, entweder abgefackelt oder bei geeignetem Druck dem Verstromungssystem zugeführt. Sofern notwendig findet vorher eine konventionelle $CO_2$-Abscheidung, zum Beispiel mit einer Druckwechselabsorbtionsanlage, statt.

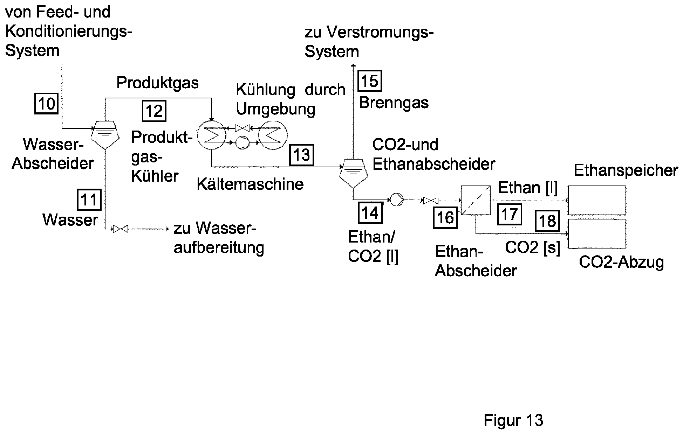

Das Separationssystem für den Produktgasstrom nach der Wasserabscheidung ist schematisch in der Figur 13 dargestellt.

Das Vergasungsprodukt hat nach der Wärmerückgewinnung in den beiden Wärmeübertragern eine Temperatur von etwa 64 °C bei einem Druck von 330 bar 19. Wasser ist demzufolge flüssig und enthält organische und anorganische Verbindungen, während sich die anderen Bestandteile des Produktes (Kohlenstoffdioxid, Methan, Wasserstoff und Ethan) im gasförmigen Aggregatzustand befinden. Durch Phasentrennung kann das Wasser somit im Wasser-Abscheider von den gasförmigen Produktbestandteilen getrennt werden.

Das verbleibende Produktgas, das sich hauptsächlich aus Kohlenstoffdioxid, Methan, Wasserstoff und Ethan zusammensetzt, wird anschließend aktiv auf eine Temperatur von unter 30 °C gekühlt. Bei ca. 30 °C werden sowohl Kohlenstoffdioxid als auch Ethan flüssig, während Methan und Wasserstoff in der gasförmigen Phase verbleiben. Der Wasserstoff wird anschließend per Membran vom restlichen Gas-Flüssigkeitsgemisch abgetrennt und der Verstromungsanlage zugeführt. Hierbei sind nur die Reinheiten einzuhalten, die von der Verstromungsanlage benötigt werden. Das restliche Gas-Flüssigkeitsgemisch wird weiter auf ca. 0 °C abgekühlt und anschließend isenthalpe entspannt, bis die Temperatur von ca. - 56,6 °C erreicht ist. Durch eine erneute Phasentrennung kann dann die Flüssigkeit, das Ethan/$CO_2$-Gemisch, aus dem Produktgas-Flüssigkeitsgemisch abgetrennt werden. Das verbleibende Gasgemisch, das im Wesentlichen aus Methan besteht, kann anschließend nach einer isenthalpen Entspannung auf den maximalen Eingangsdruck der Verstromungsanlage dieser zugeführt werden. Die flüssigen Methananteile werden dabei abgetrennt und bei Normaldruck in einem isolierten Tank gelagert.

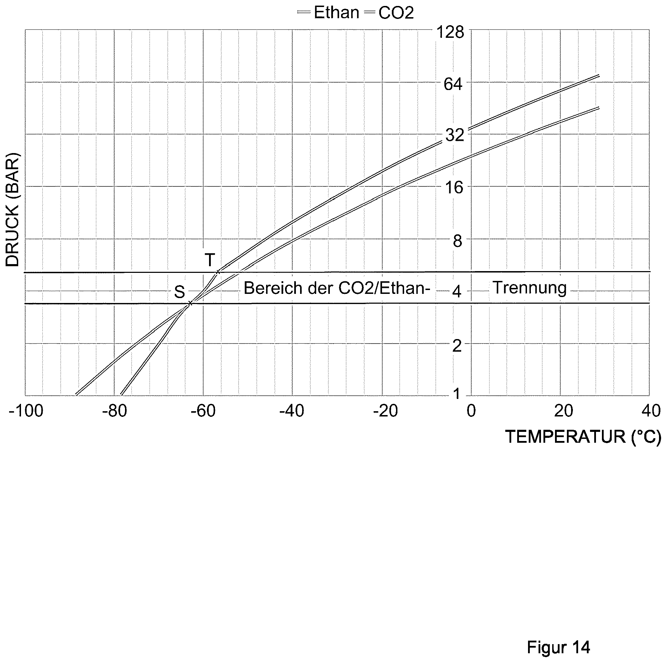

Das unverändert hohe Druckniveau des Ethan/$CO_2$-Gemischs kann genutzt werden, um das Ethan aus dem Gemisch abzutrennen. Die - 56,6 °C kalte Flüssigkeit wird auf einen Druck von 5,19 bar entspannt, wo die Dampfdruckkurve von $CO_2$ geschnitten wird - siehe Figur 14. Bei einem Druck von 5,19 bar und einer Temperatur von - 56,6 °C ist der Tripelpunkt T von $CO_2$ erreicht. Bei weiterer Druckabsenkung geht das verbliebene flüssige $CO_2$ direkt in den festen und gasförmigen Aggregatzustand über.

Bis zu Punkt S (-62 °C; 3,8 bar), an dem sich die Sublimationskurve von $CO_2$ mit der Dampfdruckkurve von Ethan schneidet, besteht das Gemisch somit ausschließlich aus festem $CO_2$, gasförmigem $CO_2$ und flüssigem Ethan. Somit ist es in diesem Bereich möglich, durch Phasentrennung das flüssige Ethan abzutrennen.

Nach anschließender Entgasung des Ethans durch langsame Absenkung des Drucks in der Flüssigkeit kann dieses anschließend bei Normaldruck in einem isolierten Tank gelagert und bei Bedarf der Verstromungsanlage zugeführt werden. Das ursprünglich flüssige $CO_2$ wird durch die Druckminderung zu etwa 40 Massenprozent fest und zu 60 Prozent gasförmig [39].

Um die Abwassermenge zu minimieren, muss ein Großteil des abgetrennten Wassers nach Möglichkeit zirkuliert werden. Dadurch sinkt der als Abwasser abzuführende Wassermassenstrom im vorliegenden Fall auf etwa 15,5 t/h.

Weiterhin sollten aus der Salzlösung, die aus dem Sumpfabzug des Reaktors abgezogen wird, Nährstoffe zurückgewonnen werden.

3.2.6 Verstromungssystem

Inklusive des separierten Ethans hat das aus der Vergasung resultierende Synthesegas folgende Zusammensetzung:

Tabelle 2-4: Zusammensetzung des Synthesegases in Vol.-%

| Methan | Wasserstoff | Ethan |
|--------|-------------|-------|
| 52 % | 39 % | 9 % |

Ein Massestrom von 2,725 t/h bei einem Heizwert von 53891 kJ/kg entspricht dabei einem Energiestrom der Brenngase von 40,8 MW.

Für die Verwertung von Synthesegasen zur Stromerzeugung gibt es die Möglichkeit der externen und der internen Verbrennung.

Bei der Stromerzeugung mit externer Verbrennung wird das Gas in einem einfachen Brenner verbrannt. Die entstehende Wärme wird anschließend genutzt, um eine Wärme-Kraft-Maschine, beispielsweise eine DampfTurbine, anzutreiben [4].

Die Stromerzeugung mit interner Verbrennung ist thermodynamisch günstiger und deswegen zu präferieren [4]. Das Gas kann dabei in einem Gasmotor oder einer Gasturbine verbrannt werden, wobei die Kombination mit einem nachgeschalteten Dampfkraftprozess möglich ist.

## INHALTSVERZEICHNIS

| | |
|---|---|
| 1.1 | Hydrothermale Verfahren zur Verwertung von Biomasse |
| 1.1.1 | Einleitung |
| 1.1.2 | Überkritisches Wasser |
| 1.1.3 | Übersicht über hydrothermale Verfahren zur Behandlung von Biomasse |
| 2 | Grundlagen der hydrothermalen Vergasung |
| 2.1 | Einleitung |
| 2.2 | Chemische Reaktionen |
| 2.3 | Umsetzung des Edukts |
| 2.4 | Einfluss von Prozessparametern |
| 2.5 | Herausforderungen der Technologie |
| 3 | Erfinderische Lösung |
| 3.1 | Grundlegender Prozess |
| 3.2 | Beschreibung der erfinderischen Lösung |
| 3.2.1 | Einleitung |
| 3.2.2 | Beschreibung des kompletten Prozessschemas |
| 3.2.3 | Feed- und Konditionierungssystem am Beispiel von Maissilage |
| 3.2.4 | Reaktions- und Wärmerückgewinnungssystem |
| 3.2.5 | Separationssystem |
| 3.2.6 | Verstromungssystem |

## VERZEICHNIS DER ABKÜRZUNGEN

| | | |
|---|---|---|
| $\alpha_n$ | - | Annuitätsfaktor |
| m | a | Dauer der Engineering-Phase/Bauphase |
| $\rho$ | $m^3/kg$ | Dichte |
| q | - | Diskontierungsfaktor |
| p | bar | Druck |
| $k_0$ | € | Einzelnes Glied der Zahlungsreihe |
| $\dot{E}$ | W | Elektrische Arbeit |
| p | - | Eskalationsfaktor |
| $K_{esk}$ | € | Eskalierte Kosten |
| u | m/s | Geschwindigkeit |
| GVE | - | Großvieheinheit |
| $A_{OT}$ | € | Investitionsausgabe zum Zeitpunkt t |
| t | a | Jahr der Nutzungsdauer |
| $Y$ | - | Kohlenstoffvergasungsumsatz |
| $\dot{m}$ | kg/s | Massenstrom |
| n | - | Oxidationskoeffizient |
| ε | - | Permittivität |
| $\Delta H^0_{R\,298}$ | J/mol | Reaktionsenthalpie |
| $d_i$ | m | Rohrinnendurchmesser |
| l | m | Rohrlänge |
| $\Delta h^0$ | J/kg | Spezifischer Heizwert |

(fortgesetzt)

| | | |
|---|---|---|
| T | °C | Temperatur |
| Vol.-% | % | Volumenprozent |
| Q | J | Wärme |
| $\dot{Q}$ | W | Wärmestrom |
| $A_w$ | m$^2$ | Wärmetauschfläche |
| ε | - | Wirkungsgrad |
| n | a | Zeitperiode |
| Z | € | Zinsen zum Inbetriebnahmezeitpunkt |

| | |
|---|---|
| Abb. | Abbildung |
| A | Asche |
| bzw. | beziehungsweise |
| BMBF | Bundesministerium für Bildung und Forschung |
| ca. | circa |
| GuD-Kraftwerk | Gas- und Dampfturbinen-Kraftwerk |
| GuD-Prozess | Gas- und Dampfturbinen-Prozess |
| HD | Hochdruck |
| HTC | Hydrothermale Karbonisierung |
| HTU | Hydrothermale Verflüssigung |
| HTG | Hydrothermale Vergasung |
| k.A. | keine Angabe |
| ND | Niederdruck |
| oTM | Organische Trockenmasse |
| TM | Trockenmasse |
| z. B. | zum Beispiel |

**INDIZES**

| | |
|---|---|
| - | abgegeben |
| el | elektrisch |
| G | Gas |
| min | mindestens |
| TM | Trockenmasse |
| + | zugeführt |

**LITERATURVERZEICHNIS**

[1] P. M. D'Jesús Montilva, Die Vergasung von realer Biomasse in überkrischem Wasser, Karlsruhe: Universitätsverlag Karlsruhe, 2007.

[2] H. Weingärtner und E. U. Franck, "Überkritisches Wasser als Lösungsmittel," Angew. Chemie, Nr. 117, pp. 2730-2752, 2005.

[3] A. Kruse, "Behandlung von Biomasse mit überkritischem Wasser," Chemie Ingenieur Technik, Nr. 83, pp. 1381-1389, 2011.

[4] M. Buttmann, "Klimafreundliche Kohle durch Hydrothermale Karbonisierung von Biomasse," Chemie Ingenieur Technik, Nr. 83, pp. 1890-1896, 2011.

[5] T. Belusa, A. Funke, B. Frank und F. Ziegler, "Hydrothermale Karbonisierung und energetische Nutzung von Biomasse- Möglichkeiten und Grenzen," in Gülzower Fachgespräche: Hydrothermale Carbonisierung, Bd. 33, Gülzow, Fachagentur Nachwachsende Rohstoffe e.V. (FNR), 2010, pp. 42-54.

[6] A. Kruse und N. Dahmen, "Water-A magic solvent for biomass conversion," J. of Supercritical Fluids 96, Nr. 96, pp. 36-45, 2015.

[7] S. S. Toor, L. Rosendahl und A. Rudolf, "Hydrothermal liquefaction of biomass: A review of subcritical water technologies," Energy, Nr. 36, pp. 2328-2342, 2011.

[8] R. Fritz, "Hydrothermale Verfahren," KIT, 21 August 2013. [Online]. Available: www.ikft.kit.edu/552.php. [Zugriff am 8 September 2016].

[9] N. Boukis, U. Galla, V. Diem, P. D'Jesús und E. Dinjus, "Wasserstoffreiches Brenngas aus nasser Biomasse. Erste Ergebnisse mit der Pilot-Anlage VERENA," in DGMK-Fachbereichstagung "Energetische Nutzung von Biomassen" vom 19. bis 21. April 2004, 2004.

[10] F. Vogel, "Hydrothermale Verfahren," in Energie aus Biomasse, Springer Vieweg, 2016, pp. 1267-1338.

[11] D. Lachos-Perez, J. Prado, P. Torres-Mayanga, T. Forster-Carneiro und A. Meireles, "Supercritical Water Gasificacion of Biomass for Hydrogen Production: Variable of the Process," Food and Public Health, Nr. 5, pp. 92-101, 2015.

[12] A. Kruse, "Hydrothermal biomass gasification," J. of Supercritical Fluids, Nr. 47, pp. 391-399, 2009.

[13] N. Boukis, "Bau einer Anlage zur Biomassevergasung unter hydrothermalen Bedingungen," Forschungszentrum Karlsruhe, 2011.

[14] L. Qian, S. Wang, D. Xu, Y. Guo, X. Tang und L. Wang, "Treatment of municipal sewage sludge in supercritical water: A review," Water Research, Nr. 89, pp. 118-131, 2016.

[15] Q. Guan, C. Wei, X. Chai, P. Ning, S. Tian, J. Gu, Q. Chen und R. Miao, "Energetic analysis of gasification of biomass by partial oxidation in supercritical water," Chinese Journal of Chemica Engineering, Nr. 23, pp. 205-212, 2015.

[16] T. Richard, J. Poirier, C. Reverte, C. Aymonier, A. Loppinet-Serani, G. Iskender, P. Escot-Bocanegra und F. Marias, "Corrosion of ceramics for vinasse gasification in supercritical water," Journal of the European Ceramic Society, Nr. 32, pp. 2219-2233, 2012.

[17] O. Yakaboylu, J. Harinck, K. Smit und W. de Jong, "Supercritical Water Gasification of Biomass: A Literature and Technology Overview," Energies, Nr. 8, pp. 859-894, 2015.

[18] D. Xu, C. Huang, S. Wang, G. Lin und Y. Guo, "Salt deposition in supercritical water oxidation," Chemical Engineering Journal, Nr. 279, pp. 1010-1022, 2015.

[19] P. Azadi und R. Farnood, "Review of heterogenous catalysts for sub- and supercritical water gasification of biomass and wastes," International Journal of Hydrogen Energy, Nr. 36, pp. 9529-9541, 2011.

[20] M. Gassner, F. Vogel, G. Heyen und F. Marechal, "Optimal process design for the polygeneration of SNG, power and heat by hydrothermal gasification of waste biomass: Thermo-economic process modelling and integration," Energy and Environmental Science, 2011.

[21] N. Boukis und U. Galla, "Verfahren zur hydrothermalen Vergasung von Biomasse in überkritischem Wasser". Patent DE 10 2006 044 116 B3, 30 April 2008.

[22] M. Kaltschmitt, H. Hartmann und H. Hofbauer, Energie aus Biomasse, Springer Vieweg, 2016.

[23] W. Eifler, E. Schlücker, U. Spicher und G. Will, Küttner Kolbenmaschinen, Wiesbaden: Vieweg+Teubner, 2009.

[24] D. Klingler, Energetische Nutzung von feuchter Biomasse in überkritischem Wasser, Dissertation, Technische Universität Darmstadt, 2006.

[25] O. Sawai, T. Nunoura und K. Yamamoto, "Application of subcritical water liquefaction as pretreatment for supercritical water gasification system in domestic watewater treatment plant," J. of Supercritical Fluids, Nr. 77, pp. 25-32, 2013.

[26] N. Boukis und U. Galla, "Reaktor für Reaktionen bei hohem Druck und hoher Temperatur und dessen Anwendung". Patent EP 2 361 675 A1, 31. August 2011.

[27] R. Heninger, "Vorrichtung und Verfahren zum Erzeugen und Applizieren von Trockeneis". Patent EP 2 332 693 A1, 15 Juni 2011.

[28] T. Yanagida, T. Minowa, Y. Shimizu, Y. Matsumura und Y. Noda, "Recovery of activated carbon catalyst, calcium, nitrogen and phosphate from effluent following supercritical water gasification of poultry manure," Bioresource Technology, Nr. 100, pp. 4884-4886, 2009.

[29] E. Gasafi, M.-Y. Reinecke, A. Kruse und L. Schebek, "Economic analyisis of sewage sludge gasification in supercritical water for hydrogen production," Biomass and bioenergy, Nr. 32, pp. 1085-1096, 2008.

[30] B. Wiechmann, C. Dienemann, C. Kabbe, S. Brandt und I. Vogel, "Klärschlammentsorgung in der Bundesrepublik Deutschland," Umweltbundesamt, Dessau-Roßlau, 2013.

[31] N. Y. Acelas, D. P. López, D. W. F. Brilman, S. R. A. Kersten, A. Maarten und J. Kootstra, "Supercritical water gasification of sewage sludge: Gas production and phosphorus recovery," Bioresource Technology , Nr. 174, pp. 167-175, 2014.

[32] D. Thrän, O. Arendt, H. Adiwiraah und M. Kaltschmitt, "Nebenprodukte, Rückstände und Abfälle," in Energie aus Biomasse, Springer Vieweg, 2016, pp. 273-325.

[33] K. S. Ro, K. Cantrell, D. Eliott und P. G. Hunt, "Catalytic Wet Gasification of Municipal and Animal Wastes," Industrial & Engineering Chemistry Research , Nr. 46, pp. 8839-8845, 2007.

[34] C. Dieckmann, M. Kaltschmitt, F. Scholwin und W. Edelmann, "Produkte und Nutzung," in Energie aus Biomasse, Springer Vieweg, 2016, pp. 1722-1736.

[35] "FNR-Biogas: Faustzahlen," Fachagentur Nachwachsende Rohstoffe e. V. (FNR), [Online]. Available: http://biogas.fnr.de/daten-undfakten/faustzahlen/. [Zugriff am 10. November 2016] .

[36] P. Konstantin, Praxisbuch Energiewirtschaft, Springer Vieweg, 2007.

[37] "Gesetz zur Einführung von Ausschreibungen für Strom aus erneuerbaren Energien und zu weiteren Änderungen des Rechts der erneuerbaren Energien," Bundesgesetzblatt Jahrgang 2016, Bd. 1, Nr. 49, 2016.

[38] Basisdaten Bioenergie Deutschland 2016, Fachagentur Nachwachsende Rohstoffe e. V., 2016.

[39] J. Q. Albarelli, A. Mian, D. T. Santos, A. V. Ensinas, F. Maréchal und A. Meireles, "Valorization of sugarcane biorefinery residues using supercritical water gasification: A case study and perspectives," The Journal of Supercritical Fluids, Nr. 96, pp. 133-143, 2015.

[40] S. Lange und L. Pellegrini, "Economic analysis of a combined production of hydrogen-energy from empty fruit bunches," Biomass and bioenergy, Nr. 59, pp. 520-531, 2013.

**Patentansprüche**

1. Verfahren zur Vergasung und Verstromung von feuchter Biomasse mit überkritischem Wasser, wobei ein Edukt der Vergasungsanlage gegeben ist, welches sich aus Trockenmasse und Wasser zusammensetzt und um eine konstante Biomassekonzentration zu erreichen, wird die zu vergasende Biomasse je nach Wassergehalt noch mit Wasser verdünnt oder mit trockenmassehaltiger Biomasse angereichert, und nach einer Vorkonditionierung durch Zerkleinerung und Mischung der Biomassesuspension liegt ein pumpfähiges, einheitliches Edukt vor, welches anschließend auf einen Druck von etwa 27 bar gebracht und einem ersten Wärmeübertrager zugeführt wird, welcher die Suspension auf 225 °C erhitzt und nachfolgend bei dieser Temperatur die Biomassesuspension in den Verflüssigungsreaktor geleitet wird, worin sie 30 min auf der Eingangstemperatur gehalten wird, und anschließend wird die Suspension auf den Vergasungsdruck von ca. 350 bar gebracht und nachfolgend durchläuft das Biomassegemisch einen zweiten Wärmeübertrager, in dem es durch Wärmeübertragung mit dem Vergasungsprodukt auf eine Temperatur von etwa 630 °C erhitzt wird und dabei geht das Wasser in den überkritischen Zustand über und eine Vergasungsreaktion beginnt, wobei die Löslichkeit des Wassers für organische Stoffe durch den Übergang in den überkritischen Zustand erhöht wird, dabei sinkt die Löslichkeit für Salze, die dementsprechend zu einem großen Teil ausfallen und mit in den Vergasungsreaktor geschleust werden, um die Vergasungstemperatur von 700 °C zu erreichen, ist eine zusätzliche Wärmezufuhr notwendig, die durch elektrische Heizelemente im Vergasungsreaktor bereitgestellt wird, und anschließend ist nach Durchlaufen des Vergasungsreaktors die Biomasse zu einem Großteil in Gase umgesetzt, die insbesondere Gase, wie Kohlenstoffdioxid, Methan, Wasserstoff und Ethan enthält und weiterhin besteht das Vergasungsprodukt hauptsächlich aus nicht umgesetztem überkritischen Wasser und ausgefallenen Salzen und nicht vergasten organischen Partikeln, und nachfolgend werden die ausgefallenen Salze mittels eines Sumpfabzugs als Salzlösung abgeschieden, und anschließend erfolgt die Kühlung des Produktes durch Wärmerückgewinnung in den beiden Wärmeübertragern auf entsprechend 275 °C und 65 °C bei unverändert hohem Druckniveau, wobei ab einer Temperatur von 374 °C Wasser im flüssigen Aggregatzustand vorliegt und daher nach der Wärmerückgewinnung in einem Wasserabscheider vom Produktgas separiert werden kann, das vorhandene Produktgas besteht nunmehr hauptsächlich aus Kohlenstoffdioxid, Methan, Wasserstoff und Ethan, und die notwendige $CO_2$-Abtrennung zur Gasaufbereitung erfolgt anschließend durch Kühlung, und durch eine Kältemaschine wird das Produktgas auf eine Temperatur von unter 30 °C gekühlt, da bei dieser Temperatur und dem vorherrschenden hohen Druck sowohl $CO_2$ als auch Ethan flüssig sind und im $CO_2$- und Ethan-Abscheider durch Phasentrennung abgeschieden werden, das verbleibende Brenngas, das sich aus Methan und Wasserstoff zusammensetzt, kann nun in den vom Vergasungsprozess unabhängigen Verstromungsprozess verwertet werden.

## Claims

1. Processs for gasification and conversion into electricity of moist biomass with supercritical water, where an educt of the gasification plant is given which is composed of dry matter and water and, in order to achieve a constant biomass concentration, the biomass to be gasified, depending on the water content, is still diluted with water or enriched with biomass containing dry matter, and after preconditioning by comminution and mixing of the biomass suspension, a pumpable biomass slurry is obtained, uniform starting material, which is then brought to a pressure of about 27 bar and fed to a first heat exchanger, which heats the suspension to 225 °C and subsequently the biomass suspension is fed at this temperature into the liquefaction reactor, where it is kept at the inlet temperature for 30 min, and then the suspension is brought to the gasification pressure of about 350 bar and subsequently the biomass mixture passes through a second heat exchanger, in which it is heated to a temperature of about 630 °C by heat transfer with the gasification product, and in the process the water changes to the supercritical state and a gasification reaction begins, whereby the solubility of the water for organic substances is increased by the change to the supercritical state, while the solubility for salts decreases, which accordingly precipitate to a large extent and are also transferred to the gasification reactor and, in order to reach the gasification temperature of 700 °C, an additional heat input is necessary which is provided by electric heating elements in the gasification reactor, and then, after passing through the gasification reactor, the biomass is converted to a large extent into gases, which contain in particular gases such as carbon dioxide, methane, hydrogen and ethane, and furthermore the gasification product consists mainly of unreacted supercritical water and precipitated salts and non-gasified organic particles, and subsequently the precipitated salts are separated as a salt solution by means of a sump discharge, and then the product is cooled by heat recovery in the two heat exchangers to 275 °C and 65 °C correspondingly at an unchanged high pressure level, whereby, from a temperature of 374 °C, water is present in the liquid aggregate state and can therefore be separated from the product gas after heat recovery in a water separator, the product gas present now consists mainly of carbon dioxide, methane, hydrogen and ethane, and the necessary $CO_2$ separation for gas treatment is then carried out by cooling, and a refrigeration machine cools the product gas to a temperature below 30 °C, since, at this temperature and the prevailing high pressure, both $CO_2$ and ethane are liquid and are separated in the $CO_2$ and ethane separator by phase separation, the remaining fuel gas, which consists of methane and hydrogen, can now be used in the electricity generation process independent of the gasification process.

**Revendications**

1. Procédé de gazéification et de conversion en énergie électrique de biomasse humide avec de l'eau supercritique, produisant une matière de départ de l'installation de gazéification, composée de masse sèche et d'eau et permettant d'obtenir une concentration de biomasse constante, la biomasse à gazéifier étant, en fonction de sa teneur en eau, diluée avec de l'eau ou enrichie de biomasse contenant de la masse sèche. Après préconditionnement par broyage et mélange de la suspension de biomasse, on dispose d'une matière de départ homogène et pompable, amenée ensuite à une pression approximative de 27 bar et envoyée dans un premier échangeur de chaleur qui chauffe la suspension à 225 °C, la suspension de biomasse étant envoyée ensuite à cette température dans le réacteur de condensation. Après y être demeurée 30 min à une température d'entrée constante, la suspension est amenée à la pression de gazéification d'env. 350 bar, le mélange de biomasse traversant ensuite un second échangeur de chaleur dans lequel il est chauffé à une température approximative de 630 °C suite au transfert de chaleur avec le produit de gazéification. L'eau passe alors à l'état supercritique et une réaction de gazéification débute, avec augmentation de la solubilité pour les substances organiques, suite au passage à l'état supercritique et à la diminution de la solubilité pour les sels précipités en forte quantité et envoyés dans le réacteur de gazéification. Pour atteindre la température de gazéification de 700 °C, un nouvel apport de chaleur est nécessaire, au moyen d'éléments chauffants électriques dans le réacteur de gazéification. Après avoir ensuite traversé le réacteur de gazéification, la biomasse est en grande partie convertie en gaz, en particulier du gaz carbonique, du méthane, de l'hydrogène et de l'éthane, le produit de gazéification restant principalement composé d'eau supercritique n'ayant pas réagi, de sels précipités et de particules organiques non gazéifiées et les sels précipités sont ensuite évacués sous forme de solution saline via un puisard et le produit refroidi à 275 °C et 65 °C par récupération de chaleur dans les deux échangeurs de chaleur, le niveau de pression restant constant. À partir d'une température de 374 °C, de l'eau apparaît à l'état liquide, mais elle peut être séparée du gaz produit, après la récupération de chaleur, dans un séparateur d'eau, le gaz produit existant se composant alors principalement de gaz carbonique, méthane, hydrogène et éthane, la séparation nécessaire du $CO_2$ ayant ensuite lieu par refroidissement pour le traitement du gaz. Le gaz produit est refroidi à une température inférieure à 30 °C dans une machine de réfrigération, car le $CO_2$ et l'éthane sont liquides à cette température et aux hautes pressions existantes, et doivent être séparés par séparation de phase dans le séparateur de $CO_2$ et d'éthane. Le gaz combustible résiduel, composé de méthane et d'hydrogène, peut alors être exploité dans le processus de conversion en énergie électrique indépendant du processus de gazéification.

Figur 1

Figur 2

Figur 3

| Edukt | | |
|---|---|---|

| TM | Wasser | |
|---|---|---|

| A | oTM | genutztes Wasser |
|---|---|---|

ungenutzte oTM | genutzte oTM | ungenutztes Wasser

| Produktgas |
|---|

| CO2 | Brenn-gas |
|---|---|

| A | CO2 | Wasser |
|---|---|---|

ungenutzte oTM

Brenn-gas

Figur 4

Biomasse Wasser Rauchgas

Reaktor
35l, Tmax=700°C

Feed-
tank

Vorwärmer

Wasser

Produktgas

Rauchgas
CO2-Wäscher

H2,CH4
P<200bar

Wärmetauscher

Kühlwasser

Abzug

Mageres
Gas

HP-Pumpe

350bar
100kg/h

Kühler

Phasentrennung
Druckabbau

Feed-System

Reaktions-System

Separations-
System

Abwasser

Figur 5

Biomasse/
Wasser

Energie

Edukt

Produkt

Brenngas

Strom

| Feed- und Konditionierungs-System | Reaktions- und Wärmerück-gewinnungs-System | Separations-System | Verstromungs-System |

Salze, organ.
Bestandteile,
CO2, Wasser

Figur 6

Maissilage         Prozesswasser
(10t/h)             (1,57 t/h)

Edukt
(11,57 t/h)

Reaktor
(Gasausbeute: 0,82)          Abwasser
                             (0,48t/h)

Produktgas

Figur 7

Figur 8

Figur 9

von Feed- und
Konditionierungs-
System

Edukt

HD-Pumpe

4

5

Wärme-
Übertrager 2

Zu Feed- und
Konditionierungs-
System

9

7

Produkt

6

zu
Separationssystem

T=700°C
p=350bar

8

Salze

Vergasungs-
Reaktor
(elektr. beheizt)

Figur 10

Figur 11

Figur 12

von Feed- und
Konditionierungs-
System

zu Verstromungs-
System

10

Wasser-
Abscheider

Produktgas

12

Produktgas-
Kühler

Kühlung durch
Umgebung

15
Brenngas

13

CO2-und
Ethanabscheider

Ethanspeicher

Kältemaschine

11

Wasser

14

16

17

18

Ethan [l]

zu Wasseraufbereitung

Ethan/
CO2 [l]

Ethan-
Abscheider

CO2 [s]

CO2-Abzug

Figur 13

33

Figur 14

Figur 15

EP 3 428 130 B1

**EP 3 428 130 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1772202 A1
- DE 102012013000 A1
- WO 2018115593 A1

- DE 102006044116 B3
- EP 2361675 A1
- EP 2332693 A1

### In der Beschreibung aufgeführte Nicht-Patentliteratur

- **P. M. D'JESÚS MONTILVA.** Die Vergasung von realer Biomasse in überkrischem Wasser. Universitätsverlag Karlsruhe, 2007
- **H. WEINGÄRTNER ; E. U. FRANCK.** Überkritisches Wasser als Lösungsmittel. *Angew. Chemie,* 2005, 2730-2752
- **A. KRUSE.** Behandlung von Biomasse mit überkritischem Wasser. *Chemie Ingenieur Technik,* 2011, 1381-1389
- **M. BUTTMANN.** Klimafreundliche Kohle durch Hydrothermale Karbonisierung von Biomasse. *Chemie Ingenieur Technik,* 2011, 1890-1896
- Hydrothermale Karbonisierung und energetische Nutzung von Biomasse- Möglichkeiten und Grenzen. **T. BELUSA ; A. FUNKE ; B. FRANK ; F. ZIEGLER.** Gülzower Fachgespräche: Hydrothermale Carbonisierung. Fachagentur Nachwachsende Rohstoffe e.V. (FNR), 2010, vol. 33, 42-54
- **A. KRUSE ; N. DAHMEN.** Water-A magic solvent for biomass conversion. *J. of Supercritical Fluids 96,* 2015, 36-45
- **S. S. TOOR ; L. ROSENDAHL ; A. RUDOLF.** Hydrothermal liquefaction of biomass: A review of subcritical water technologies. *Energy,* 2011, 2328-2342
- **R. FRITZ.** Hydrothermale Verfahren. *KIT,* 21. August 2013, www.ikft.kit.edu/552.php.
- **N. BOUKIS ; U. GALLA ; V. DIEM ; P. D'JESÚS ; E. DINJUS.** Wasserstoffreiches Brenngas aus nasser Biomasse. Erste Ergebnisse mit der Pilot-Anlage VERENA. *DGMK-Fachbereichstagung "Energetische Nutzung von Biomassen,* 19. April 2004
- Hydrothermale Verfahren. **F. VOGEL.** Energie aus Biomasse. Springer Vieweg, 2016, 1267-1338
- **D. LACHOS-PEREZ ; J. PRADO ; P. TORRES-MAYANGA ; T. FORSTER-CARNEIRO ; A. MEIRELES.** Supercritical Water Gasificacion of Biomass for Hydrogen Production: Variable of the Process. *Food and Public Health,* 2015, 92-101

- **A. KRUSE.** Hydrothermal biomass gasification. *J. of Supercritical Fluids,* 2009, 391-399
- **N. BOUKIS.** Bau einer Anlage zur Biomassevergasung unter hydrothermalen Bedingungen. *Forschungszentrum Karlsruhe,* 2011
- **L. QIAN ; S. WANG ; D. XU ; Y. GUO ; X. TANG ; L. WANG.** Treatment of municipal sewage sludge in supercritical water: A review. *Water Research,* 2016, 118-131
- **Q. GUAN ; C. WEI ; X. CHAI ; P. NING ; S. TIAN ; J. GU ; Q. CHEN ; R. MIAO.** Energetic analysis of gasification of biomass by partial oxidation in supercritical water. *Chinese Journal of Chemica Engineering,* 2015, 205-212
- **T. RICHARD ; J. POIRIER ; C. REVERTE ; C. AYMONIER ; A. LOPPINET-SERANI ; G. ISKENDER ; P. ESCOT-BOCANEGRA ; F. MARIAS.** Corrosion of ceramics for vinasse gasification in supercritical water. *Journal of the European Ceramic Society,* 2012, 2219-2233
- **O. YAKABOYLU ; J. HARINCK ; K. SMIT ; W. DE JONG.** Supercritical Water Gasification of Biomass: A Literature and Technology Overview. *Energies,* 2015, 859-894
- **D. XU ; C. HUANG ; S. WANG ; G. LIN ; Y. GUO.** Salt deposition in supercritical water oxidation. *Chemical Engineering Journal,* 2015, 1010-1022
- **P. AZADI ; R. FARNOOD.** Review of heterogenous catalysts for sub- and supercritical water gasification of biomass and wastes. *International Journal of Hydrogen Energy,* 2011, 9529-9541
- **M. GASSNER ; F. VOGEL ; G. HEYEN ; F. MARECHAL.** Optimal process design for the polygeneration of SNG, power and heat by hydrothermal gasification of waste biomass: Thermo-economic process modelling and integration. *Energy and Environmental Science,* 2011
- **M. KALTSCHMITT ; H. HARTMANN ; H. HOFBAUER.** Energie aus Biomasse. Springer Vieweg, 2016

- **W. EIFLER ; E. SCHLÜCKER ; U. SPICHER ; G. WILL.** Küttner Kolbenmaschinen. Vieweg+Teubner, 2009
- **D. KLINGLER.** Energetische Nutzung von feuchter Biomasse in überkritischem Wasser. Technische Universität Darmstadt, 2006
- **O. SAWAI ; T. NUNOURA ; K. YAMAMOTO.** Application of subcritical water liquefaction as pretreatment for supercritical water gasification system in domestic watewater treatment plant. *J. of Supercritical Fluids,* 2013, 25-32
- **T. YANAGIDA ; T. MINOWA ; Y. SHIMIZU ; Y. MATSUMURA ; Y. NODA.** Recovery of activated carbon catalyst, calcium, nitrogen and phosphate from effluent following supercritical water gasification of poultry manure. *Bioresource Technology,* 2009, 4884-4886
- **E. GASAFI ; M.-Y. REINECKE ; A. KRUSE ; L. SCHEBEK.** Economic analyisis of sewage sludge gasification in supercritical water for hydrogen production. *Biomass and bioenergy,* 2008, 1085-1096
- **B. WIECHMANN ; C. DIENEMANN ; C. KABBE ; S. BRANDT ; I. VOGEL.** Klärschlammentsorgung in der Bundesrepublik Deutschland. Umweltbundesamt, 2013
- **N. Y. ACELAS ; D. P. LÓPEZ ; D. W. F. BRILMAN ; S. R. A. KERSTEN ; A. MAARTEN ; J. KOOTSTRA.** Supercritical water gasification of sewage sludge: Gas production and phosphorus recovery. *Bioresource Technology,* 2014, 167-175
- Nebenprodukte, Rückstände und Abfälle. **D. THRÄN ; O. ARENDT ; H. ADIWIRAAH ; M. KALTSCHMITT.** Energie aus Biomasse. Springer Vieweg, 2016, 273-325
- **K. S. RO ; K. CANTRELL ; D. ELIOTT ; P. G. HUNT.** Catalytic Wet Gasification of Municipal and Animal Wastes. *Industrial & Engineering Chemistry Research,* 2007, 8839-8845
- Produkte und Nutzung. **C. DIECKMANN ; M. KALTSCHMITT ; F. SCHOLWIN ; W. EDELMANN.** Energie aus Biomasse. Springer Vieweg, 2016, 1722-1736
- FNR-Biogas: Faustzahlen. Fachagentur Nachwachsende Rohstoffe e. V. (FNR)
- **P. KONSTANTIN.** Praxisbuch Energiewirtschaft. Springer Vieweg, 2007
- Gesetz zur Einführung von Ausschreibungen für Strom aus erneuerbaren Energien und zu weiteren Änderungen des Rechts der erneuerbaren Energien. *Bundesgesetzblatt,* 2016, vol. 1 (49
- Basisdaten Bioenergie Deutschland 2016. Fachagentur Nachwachsende Rohstoffe e. V, 2016
- **J. Q. ALBARELLI ; A. MIAN ; D. T. SANTOS ; A. V. ENSINAS ; F. MARÉCHAL ; A. MEIRELES.** Valorization of sugarcane biorefinery residues using supercritical water gasification: A case study and perspectives. *The Journal of Supercritical Fluids,* 2015, 133-143
- **S. LANGE ; L. PELLEGRINI.** Economic analysis of a combined production of hydrogen-energy from empty fruit bunches. *Biomass and bioenergy,* 2013, 520-531